# EUROPEAN PATENT APPLICATION

(11) **EP 4 694 253 A1**
(43) Date of publication of application: **11.02.2026**
(21) Application number: 24796203.8
(22) Date of filing: 26.04.2024
(51) Int. Cl.: H04W 12/04, H04W 36/00

(54) **COMMUNICATION METHOD AND CORRESPONDING APPARATUS**

(30) Priority: 26.04.2023 CN 202310474589
(71) Applicant: Huawei Technologies Co., Ltd., Shenzhen, Guangdong 518129 (CN)
(72) Inventor: WU, Yizhuang, Shenzhen, Guangdong 518129 (CN); HENDA, Noamen Ben, 80992 Munich (DE)
(74) Representative: MERH-IP Matias Erny Reichl Hoffmann Patentanwälte PartG mbB
(86) International application number: PCT/CN2024/089934
(87) International publication number: WO 2024/222829

(57) **Abstract**

This application provides a communication method and a communication apparatus, to improve communication security between the communication apparatus and a secondary node. The method includes: A reconfiguration message received by the communication apparatus from a network side includes configuration information of at least two candidate cells, and the at least two candidate cells include a first candidate cell and a second candidate cell. When accessing the first candidate cell, the communication apparatus selects an unused DRB ID from a plurality of DRB IDs carried in the configuration information of the first candidate cell, to protect communication data transmitted between the communication apparatus and the first candidate cell through a first DRB.

## Description

### CROSS-REFERENCE TO RELATED APPLICATIONS

This application claims priority to Chinese Patent Application No. 202310474589.8, filed with the China National Intellectual Property Administration on April 26, 2023 and entitled "COMMUNICATION METHOD AND CORRESPONDING APPARATUS", which is incorporated herein by reference in its entirety.

### TECHNICAL FIELD

This application relates to the field of communication technologies, and in particular, to a communication method and a corresponding apparatus.

### BACKGROUND

With development of communication technologies, some communication apparatuses, for example, a mobile phone, can support a dual connectivity communication mode. Dual connectivity is a mode in which a communication apparatus is in a radio resource control (radio resource control, RRC) connected state. The communication apparatus in dual connectivity may not only communicate with a master node (master node, MN), but also communicate with a secondary node (secondary node, SN). During research, the applicant finds that, according to the conventional technology, when the communication apparatus switches between cells served by one or more secondary nodes, input parameters used for security protection on communication data between the communication apparatus and the cells may be completely the same. Consequently, a security risk exists in communication between the communication apparatus and the secondary nodes.

Therefore, how to establish a secure connection between the communication apparatus and the SN and improve security performance between the communication apparatus and the SN is a technical problem to be urgently resolved.

### SUMMARY

This application provides a communication method and a corresponding apparatus, to improve communication security between a communication apparatus and an accessed secondary node.

To achieve the foregoing objective, this application uses the following technical solutions.

According to a first aspect, a communication method is provided. The method includes: The communication apparatus receives an RRC reconfiguration message, where the RRC reconfiguration message includes configuration information of at least two candidate cells, and the at least two candidate cells include a first candidate cell and a second candidate cell. The configuration information of the first candidate cell includes a first count value and a first identifier list corresponding to a first data radio bearer DRB, and the first identifier list includes at least two DRB identifiers IDs used to represent the first DRB. The configuration information of the second candidate cell includes a second count value and a second identifier list corresponding to a second DRB, and the second identifier list includes at least two DRB IDs used to represent the second DRB. When accessing the first candidate cell, the communication apparatus protects, based on a first root key and a first DRB ID in the first identifier list, communication data that is transmitted between the communication apparatus and the first candidate cell through the first DRB, where the first root key is generated by the communication apparatus based on the first count value.

It may be understood that in this application, the communication apparatus in the first aspect and the following aspects may be a terminal device (for example, a mobile phone), or a chip (system) that may be disposed in the terminal device. In other words, the communication method in the first aspect may be performed by the terminal device, or may be performed by the chip (system) in the terminal device.

At least two different DRB IDs are allocated to a DRB corresponding to a same candidate cell, so that when the communication apparatus accesses the same candidate cell at different moments, during data transmission through the DRB, the communication apparatus can perform security protection on the transmitted data by using the different DRB IDs. The security protection may include ciphering and/or integrity protection. For example, when the security protection is ciphering, different key streams may be generated based on the different DRB IDs.

In a possible implementation, the configuration information of the first candidate cell includes the first identifier list corresponding to a plurality of DRBs, and the first identifier list includes at least two DRB IDs used to represent each of the plurality of DRBs. It may be understood that the first identifier list corresponds to the plurality of DRBs.

In a possible implementation, before the communication apparatus protects, based on the first root key and the first DRB ID in the first identifier list, the communication data that is transmitted between the communication apparatus and the first candidate cell through the first DRB, the method further includes: The communication apparatus selects the first DRB ID from the first identifier list. That the first DRB ID is selected may also be understood as: The communication apparatus obtains the first DRB ID from the first identifier list. A rule for selecting or obtaining a DRB ID by the communication apparatus may be a preconfigured rule, for example, replacement in ascending order or replacement based on a sequence relationship between DRB IDs in a message. In a possible implementation, the first identifier list includes a default DRB ID and at least one candidate DRB ID, and the default DRB ID is an initial DRB ID of the DRB, or the first identifier list includes at least two candidate DRB IDs.

In a possible implementation, the first DRB ID is a DRB ID that is not used in the first identifier list. The DRB ID that is not used in the first identifier list is used, to ensure that at least one DRB ID in a plurality of input parameter values used to protect communication data is different.

In a possible implementation, the communication apparatus deletes the first DRB ID, or marks the first DRB ID as used. When the communication apparatus leaves the first candidate cell, a used DRB ID in the first candidate cell is deleted or marked, to ensure that when the communication apparatus accesses the first candidate cell again, the communication apparatus can perform security protection on transmitted communication data by using different DRB IDs.

In a possible implementation, the configuration of the first candidate cell further includes a first execution condition corresponding to the first candidate cell, and the configuration of the second candidate cell includes a second execution condition corresponding to the second candidate cell. The communication apparatus accesses the first candidate cell when the first execution condition is satisfied. Alternatively, the communication apparatus accesses the second candidate cell when the second execution condition is satisfied.

In a possible implementation, when the communication apparatus leaves the first candidate cell and accesses the second candidate cell, the communication apparatus protects, based on a second root key and a second DRB ID in the second identifier list, communication data that is transmitted between the communication apparatus and the second candidate cell through the second DRB, where the second root key is generated by the communication apparatus based on the second count value. The first count value corresponding to the first candidate cell is different from the second count value corresponding to the second candidate cell, to ensure that the first root key of the first candidate cell is different from the second root key of the second candidate cell, and ensure that at least one security input parameter value that is generated based on the second root key and that is used to protect communication data is different.

In a possible implementation, when leaving the second candidate cell and accessing the first candidate cell again, the communication apparatus protects, based on the first root key and a third DRB ID in the first identifier list, communication data that is transmitted between the communication apparatus and the first candidate cell through the first DRB, where the third DRB ID is different from the first DRB ID. When the communication apparatus accesses the first candidate cell again, the communication apparatus performs security protection on the communication data that is transmitted between the communication apparatus and the first candidate cell by using, as an input parameter, a DRB ID that is different from a DRB ID used for accessing the first candidate cell previously, to ensure that at least one of input parameters used for security protection on the communication data is different when the communication apparatus successively accesses the first candidate cell. It should be noted that leaving the second candidate cell and accessing the first candidate cell again may be: after leaving the second candidate cell, first accessing another candidate cell, then leaving the another candidate cell, and subsequently accessing the first candidate cell. In a possible implementation, before the communication apparatus protects, based on the second root key and the second DRB ID in the second identifier list, the communication data that is transmitted between the communication apparatus and the second candidate cell through the second DRB, the method further includes: The communication apparatus selects the second DRB ID from the second identifier list.

In a possible implementation, the second DRB ID is a DRB ID that is not used in the second identifier list.

In a possible implementation, the communication apparatus deletes the second DRB ID, or marks the second DRB ID as used. In this manner, if the communication apparatus switches to a same candidate cell again, the communication apparatus may know DRB IDs that are not used, so that the communication apparatus can use different DRB IDs when accessing the same candidate cell, to improve communication security.

In a possible implementation, the first count value is different from the second count value.

In a possible implementation, the first count value is the same as the second count value, and a DRB ID in the first identifier list is different from a DRB ID in the second identifier list.

According to a second aspect, a communication method is provided. The communication method includes: A master node receives a first identifier list corresponding to a first data radio bearer DRB corresponding to a first candidate cell and a second identifier list corresponding to a second DRB corresponding to a second candidate cell, where the first identifier list includes at least two DRB identifiers IDs used to represent the first DRB, and the second identifier list includes at least two DRB IDs used to represent the second DRB; and sends an RRC reconfiguration message to a communication apparatus, where the RRC reconfiguration message includes configuration information of the first candidate cell and configuration information of the second candidate cell. The configuration information of the first candidate cell includes a first count value and the first identifier list. The configuration information of the second candidate cell includes a second count value and the second identifier list. The first count value is used to generate a first root key shared between the communication apparatus and the first candidate cell. The second count value is used to generate a second root key shared between the communication apparatus and the second candidate cell.

At least two different DRB IDs are allocated to a DRB corresponding to a same candidate cell, so that when the communication apparatus accesses the same candidate cell at different moments, during data transmission through the DRB, the communication apparatus can perform security protection on the transmitted data by using the different DRB IDs. The security protection may include ciphering and/or integrity protection. For example, when the security protection is ciphering, different key streams may be generated based on the different DRB IDs.

In a possible implementation, that the master node receives the first identifier list corresponding to the first data radio bearer DRB corresponding to the first candidate cell and the second identifier list corresponding to the second DRB corresponding to the second candidate cell includes: receiving the first identifier list from a first secondary node, and receiving the second identifier list from a second secondary node, where the first secondary node is different from the second secondary node.

In a possible implementation, the master node sends the first root key to the first secondary node, and sends the second root key to the second secondary node.

In a possible implementation, that the master node receives the first identifier list corresponding to the first data radio bearer DRB corresponding to the first candidate cell and the second identifier list corresponding to the second DRB corresponding to the second candidate cell includes: receiving the first identifier list and the second identifier list from a third secondary node.

In a possible implementation, the first root key and the second root key are sent to the third secondary node.

In a possible implementation, the first count value is different from the second count value.

In a possible implementation, the first count value is the same as the second count value, and a DRB ID in the first identifier list is different from a DRB ID in the second identifier list.

In a possible implementation, the first root key and/or the second root key are sent to the third secondary node.

According to a third aspect, a communication method is provided. A secondary node receives a secondary node addition request message from a master node; generates a first identifier list corresponding to a first data radio bearer DRB corresponding to a first candidate cell, where the first identifier list includes at least two DRB IDs used to represent the first DRB; and in response to the secondary node addition request message, sends a secondary node addition request acknowledgment message to the master node, where the secondary node addition request acknowledgment message includes the first identifier list.

At least two different DRB IDs are allocated to a DRB corresponding to a same candidate cell, so that when the communication apparatus accesses the same candidate cell at different moments, during data transmission through the DRB, the communication apparatus can perform security protection on the transmitted data by using the different DRB IDs. The security protection may include ciphering and/or integrity protection. For example, when the security protection is ciphering, different key streams may be generated based on the different DRB IDs.

In a possible implementation, the secondary node further generates a second identifier list corresponding to a second data radio bearer DRB of a second candidate cell, where the second identifier list is used to represent at least two DRB IDs of the second DRB; and in response to the secondary node addition request message, sends the secondary node addition request acknowledgment message to the master node, where the secondary node addition request acknowledgment message includes the second identifier list.

In a possible implementation, that the secondary node generates the first identifier list corresponding to the first data radio bearer DRB corresponding to the first candidate cell and the second identifier list corresponding to the second DRB corresponding to the second candidate cell includes: A first secondary node generates the first identifier list, and a second secondary node generates the second identifier list, where the first secondary node is different from the second secondary node.

In a possible implementation, the secondary node receives a first root key from the master node, and protects, based on the first root key and a first DRB ID in the first identifier list, communication data that is transmitted between the communication apparatus and the first candidate cell through the first DRB. The first DRB ID is a DRB ID that is not used in the first identifier list. The DRB ID that is not used in the first identifier list is used, to ensure that at least one DRB ID in a plurality of input parameter values used to protect communication data is different.

In a possible manner, the secondary node deletes the first DRB ID, or marks the first DRB ID as used. In this manner, if the communication apparatus switches to a same candidate cell served by the secondary node again, a used DRB ID in the same candidate cell is deleted or marked, to ensure that when the communication apparatus accesses the candidate cell again, the secondary node can perform security protection on the transmitted communication data by using a different DRB ID.

In a possible implementation, generating the first identifier list corresponding to the first data radio bearer DRB corresponding to the first candidate cell and the second identifier list corresponding to the second DRB corresponding to the second candidate cell includes: A third secondary node generates the first identifier list and the second identifier list.

In a possible implementation, the third secondary node receives the first root key corresponding to the first candidate cell and the second root key corresponding to the second candidate cell from the master node.

According to a fourth aspect, a communication method is provided. The method includes: A master node sends a secondary node addition request message to a secondary node. The secondary node generates a first identifier list corresponding to a first data radio bearer DRB corresponding to a first candidate cell, where the first identifier list includes at least two DRB identifiers IDs used to represent the first DRB. In response to the secondary node addition request message, the secondary node sends a secondary node addition request acknowledgment message to the master node, where the secondary node addition request acknowledgment message includes the first identifier list. The master node receives the first identifier list, and sends an RRC reconfiguration message to a communication apparatus, where the RRC reconfiguration message includes configuration information of the first candidate cell. The configuration information of the first candidate cell includes a first count value and the first identifier list. The first count value is used to generate a first root key shared between the communication apparatus and the first candidate cell.

For related beneficial effects in the communication method provided in the fourth aspect, refer to the related content in the second aspect and the third aspect. Details are not described herein again.

In a possible implementation, that the master node receives the first identifier list includes: In response to the secondary node addition request message, the first secondary node sends a secondary node addition request acknowledgment message to the master node, where the secondary node addition request acknowledgment message includes the first identifier list. The master node receives the first identifier list from the first secondary node.

In a possible implementation, the master node sends the first root key to the first secondary node. The first secondary node receives the first root key from the master node. The first secondary node protects, based on the first root key and a first DRB ID in the first identifier list, communication data that is transmitted between the communication apparatus and the first candidate cell through the first DRB, where the first DRB ID is a DRB ID that is not used in the first identifier list. The DRB ID that is not used in the first identifier list is used, to ensure that at least one DRB ID in a plurality of input parameter values used to protect communication data is different.

In a possible implementation, the secondary node deletes the first DRB ID, or marks the first DRB ID as used. In this manner, if the communication apparatus switches to a same candidate cell served by the secondary node again, a used DRB ID in the same candidate cell is deleted or marked, to ensure that when the communication apparatus accesses the candidate cell again, the secondary node can perform security protection on the transmitted communication data by using a different DRB ID.

In a possible implementation, the secondary node determines at least two candidate cells, where the at least two candidate cells include the first candidate cell and a second candidate cell; and generating the first identifier list corresponding to the first data radio bearer DRB corresponding to the first candidate cell further includes: the secondary node generates a second identifier list corresponding to a second DRB corresponding to the second candidate cell. The second identifier list includes at least two DRB IDs used to represent the second DRB. In response to the secondary node addition request message, the secondary node sends the secondary node addition request acknowledgment message to the master node, where the secondary node addition request acknowledgment message includes the second identifier list. The master node receives the second identifier list, and sends an RRC reconfiguration message to the communication apparatus, where the RRC reconfiguration message includes configuration information of the second candidate cell that includes a second count value and the second identifier list. The second count value is used to generate a second root key shared between the communication apparatus and the second candidate cell. According to a fifth aspect, a communication apparatus is provided. The communication apparatus includes a module configured to perform any communication method performed by the communication apparatus in the foregoing descriptions, for example, a transceiver module and a processing module. The transceiver module is configured to perform corresponding message receiving and sending actions, and the processing module may be configured to perform all actions except receiving and sending information.

Optionally, the communication apparatus according to the fifth aspect may further include a storage module. The storage module stores a program or instructions. When the processing module executes the program or the instructions, the communication apparatus can perform any communication method performed by the terminal apparatus in the foregoing descriptions.

According to a sixth aspect, a network device is provided. A function of the network device includes a module configured to perform any communication method performed by the network device in the foregoing descriptions, for example, a transceiver module and a processing module. The transceiver module is configured to perform corresponding message receiving and sending actions, and the processing module may be configured to perform all actions except receiving and sending information.

Optionally, the network device according to the sixth aspect may further include a storage module, and the storage module stores a program or instructions. When the processing module executes the program or the instructions, the communication apparatus can perform any communication method performed by the network apparatus in the foregoing descriptions.

According to a seventh aspect, a communication apparatus is provided. The communication apparatus includes a processor, and the processor is configured to execute instructions stored in a memory, so that the communication apparatus performs any communication method performed by the terminal apparatus in the foregoing descriptions.

In a possible design solution, the communication apparatus may further include the memory. The memory may be integrated with the processor, or may be disposed separately.

According to an eighth aspect, a network device is provided. The network device includes a processor, and the processor is configured to execute instructions stored in the memory, so that the communication apparatus performs any communication method performed by the network device in the foregoing descriptions.

According to a ninth aspect, a computer-readable storage medium is provided, and includes a computer program or instructions. When the computer program or the instructions are run on a computer, the computer is enabled to perform the communication method in any one of the foregoing possible implementations.

According to a tenth aspect, a computer program product is provided, and includes a computer program or instructions. When the computer program or the instructions are run on a computer, the computer is enabled to perform the communication method in any one of the foregoing possible implementations.

In the foregoing solution, the reconfiguration message received from a network side through the communication apparatus includes configuration information of at least two candidate cells, the at least two candidate cells include the first candidate cell and the second candidate cell, and the configuration information includes at least two DRB IDs corresponding to the first DRB. Therefore, when accessing the first candidate cell, the communication apparatus may select an unused DRB ID from a plurality of DRB IDs carried in the configuration information of the first candidate cell. Security protection is performed for the first DRB by using different DRB IDs, to protect communication data transmitted between the communication apparatus and the first candidate cell through the first DRB.

### BRIEF DESCRIPTION OF DRAWINGS

FIG. 1(a) is a diagram of an architecture of a communication system applicable to this application;
FIG. 1(b) is a diagram of another architecture of a communication system applicable to this application;
FIG. 1(c) is a diagram of still another architecture of a communication system applicable to this application;
FIG. 2 is a diagram of selective SCG activation;
FIG. 3 is a diagram of a CPA procedure according to an embodiment of this application;
FIG. 4 is a diagram of a CPC procedure according to an embodiment of this application;
FIG. 5 is a diagram of a security establishment procedure between UE and an SN according to an embodiment of this application;
FIG. 6 is a diagram of a communication method according to an embodiment of this application;
FIG. 7 is a flowchart of an example of a communication method 700 according to an embodiment of this application;
FIG. 8 is a flowchart of an example of a communication method 800 according to an embodiment of this application;
FIG. 9 is a flowchart of an example of a communication method 900 according to an embodiment of this application;
FIG. 10 is a diagram of a structure of an apparatus according to an embodiment of this application; and
FIG. 11 is a diagram of a structure of another apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", various other term numerals, and the like (if existent) are intended to distinguish between similar objects but do not necessarily describe a specific order or sequence. It should be understood that the data termed in such a way are interchangeable in proper circumstances, so that embodiments of the present invention described herein can be implemented in other orders than the order illustrated or described herein. In addition, the terms "include", "have", and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an Internet of Things (internet of things, IoT) communication system, or another communication system.

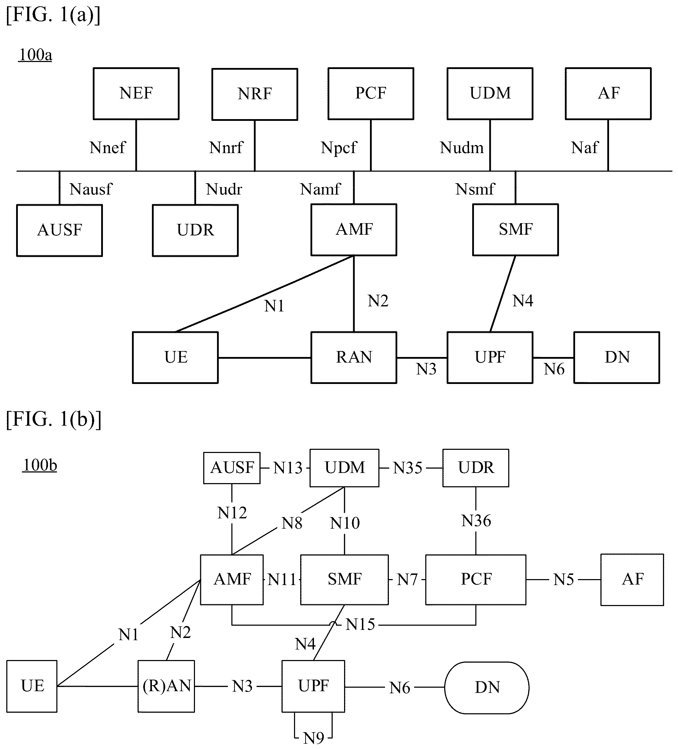

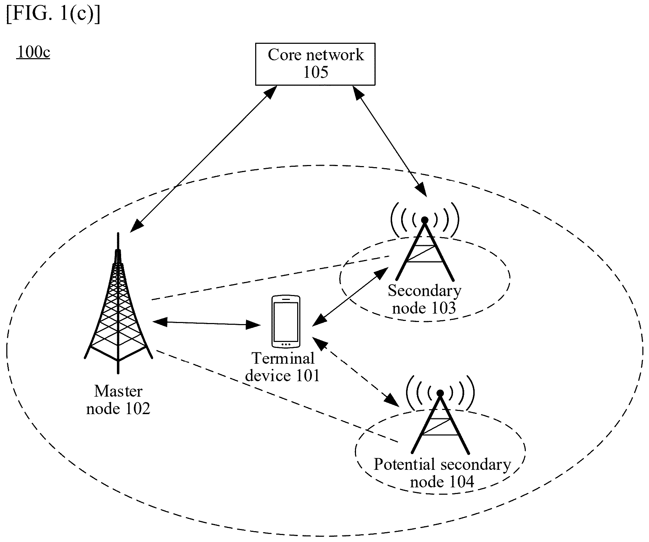

The following describes, by using examples with reference to (a) in FIG. 1 and (b) in FIG. 1, a 5G system to which embodiments of this application are applicable. It should be understood that the 5G system described in this specification is merely an example, and should not constitute any limitation on this application.

It should be further understood that some network elements in the 5G system may communicate with each other through a service-oriented interface or a point-to-point interface. The following separately describes a 5G system framework based on a point-to-point interface and a 5G system framework based on a service-oriented interface with reference to (a) in FIG. 1 and (b) in FIG. 1.

As an example for description, (a) in FIG. 1 is a diagram of an architecture of a 5G system 200a to which an embodiment of this application is applicable. (a) in FIG. 1 is a diagram of a 5G network architecture based on a point-to-point interface. As shown in (a) in FIG. 1, the network architecture may include but is not limited to the following network elements (or referred to as functional network elements, functional entities, nodes, devices, or the like):

a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), unified data management (unified data management, UDM), a BSF network element, and a unified data repository (unified data repository, UDR).

The following briefly describes the network elements shown in (a) in FIG. 1.
1. User equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a communication device, a user agent, or a user apparatus. The user equipment may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). For ease of expression subsequently, a related solution is described by using UE as an example in this application.

In addition, the user equipment may alternatively be a terminal device in an internet of things (Internet of things, IoT) system. The IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the user equipment may alternatively include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device that can access a network. The user equipment and the access network device may communicate with each other by using an air interface technology.

2. The (radio) access network ((radio) access network, (R)AN) device is configured to provide a network access function for authorized user equipment in a specific area, and is capable of using transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. A user plane function (user plane function, UPF) network element is used for packet routing and forwarding, quality of service (quality of service, QoS) handling for user plane data, and the like.

In the 5G communication system, the user plane network element may be a user plane function (user plane function, UPF) network element. In a future communication system, the user plane network element may still be the UPF network element, or may have another name. This is not limited in this application.

4. An access and mobility management function (access and mobility management function, AMF) network element: The access and mobility management function network element is mainly for mobility management, access management, and the like, and may be used to implement a function other than session management in an MME function, for example, an access authorization/authentication function.

In a future communication system, an access and mobility management device may still be the AMF, or may have another name. This is not limited in this application.

5. A session management function (session management function, SMF) network element is mainly for session management, allocation and management of an internet protocol (internet protocol, IP) address of a user equipment, selection and control of a user plane function, termination of interfaces toward policy control and charging functions, downlink data notification, and the like.

In a future communication system, a session management network element may still be the SMF network element, or may have another name. This is not limited in this application.

6. The policy control function (policy control function, PCF) network element is a unified policy framework to govern network behavior, and provides policy rule information and the like for a control plane function network element (such as the AMF or the SMF).

In a future communication system, a policy control network element may still be the PCF network element, or may have another name. This is not limited in this application.

7. The application function (application function, AF) is used for application influence on data routing, accessing the network exposure function network element, and interacting with a policy framework for policy control, and the like.

In a future communication system, an application network element may still be the AF network element, or may have another name. This is not limited in this application.

8. The unified data management (unified data management, UDM) network element is used for UE identification handling, access authentication, registration and mobility management, and the like.

In a future communication system, a unified data management network element may still be the UDM network element, or may have another name. This is not limited in this application.

9. The authentication server function (authentication server function, AUSF) network element is used to provide an authentication service, generate a key to implement two-way authentication for user equipment, and support a unified authentication framework.

In a future communication system, an authentication server function network element may still be the AUSF network element, or may have another name. This is not limited in this application.

10. A network data analytics function (network data analytics function, NWDAF) network element is used to identify a network slice instance, and load load-level information of the network slice instance. The network data analytics function enables NF consumers to subscribe to or unsubscribe from periodic notifications and notify the consumers when a threshold is exceeded.

In a future communication system, a network data analytics function network element may still be the NWDAF network element, or may have another name. This is not limited in this application.

11. Data network (data network, DN): The DN is a network located outside an operator network. The operator network may access a plurality of DNs. The DN may be deployed with a plurality of services, and may provide a data service, a voice service, and/or the like for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In (a) in FIG. 1, Nausf, Nnef, Npcf, Nudm, Naf, Namf, Nsmf, N1, N2, N3, N4, and N6 are interface sequence numbers. For meanings of the interface sequence numbers, refer to meanings defined in a 3GPP standard protocol. This is not limited herein.

In the network architecture shown in (a) in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. Relationships between other interfaces and network elements are shown in (a) in FIG. 1. For brevity, details are not described herein.

FIG. 1(b) is a diagram of a 5G network architecture based on a point-to-point interface. For descriptions of functions of network elements in the figure, refer to descriptions of functions of corresponding network elements in FIG. 1(a). Details are not described again. A main difference between (b) in FIG. 1 and (a) in FIG. 1 lies in that interfaces between network elements in (b) in FIG. 1 are point-to-point interfaces rather than service-oriented interfaces.

In the architecture shown in (b) in FIG. 1, names and functions of the interfaces between the network elements are as follows:
(1) N7 is an interface between a PCF and an SMF, configured to deliver a protocol data unit (protocol data unit, PDU) session granularity and service data flow granularity control policy.
(2) N15 is an interface between the PCF and an AMF, configured to deliver a UE policy and an access control-related policy.
(3) N5 is an interface between an AF and the PCF, configured to deliver application service requests and report network events.
(4) N4 is an interface between the SMF and a UPF, configured to transmit information between a control plane and a user plane, including delivery of a forwarding rule, a QoS control rule, a traffic statistics rule, and the like that are from the control plane to the user plane, and information reporting by the user plane.
(5) N11 is an interface between the SMF and the AMF, configured to: transmit PDU session tunnel information between a RAN and the UPF, transmit a control message sent to UE, transmit radio resource control information sent to the RAN, and the like.
(6) N2 is an interface between the AMF and the RAN, configured to transmit radio bearer control information from a core network side to the RAN, and the like.
(7) N1 is an interface between the AMF and the UE, is unrelated to access, and is configured to transmit a QoS control rule and the like to the UE.
(8) N8 is an interface between the AMF and a UDM, used by the AMF to obtain access and mobility management-related subscription data and authentication data from the UDM, and used by the AMF to register current mobility management-related information and the like of the UE with the UDM.
(9) N10 is an interface between the SMF and the UDM, used by the SMF to obtain session management-related subscription data from the UDM, and used by the SMF to register current session-related information and the like of the UE with the UDM.
(10) N35 is an interface between the UDM and a UDR, used by the UDM to obtain user subscription data information from the UDR.
(11) N36 is an interface between the PCF and the UDR, used by the PCF to obtain policy-related subscription data and application data-related information from the UDR.
(12) N12 is an interface between the AMF and the AUSF, and is used by the AMF to initiate an authentication procedure to the AUSF, where an SUCI may be carried as a subscription identifier.
(13) N13 is an interface between the UDM and the AUSF, and is used by the AUSF to obtain a user authentication vector from the UDM, to perform the authentication procedure.

In an example, (c) in FIG. 1 is a diagram of an architecture of a dual connectivity (dual connectivity, DC) communication system 100c to which this application is applicable. Dual connectivity may also be referred to as multi-radio dual connectivity (multi-radio dual connectivity, MR-DC). Generally, the dual connectivity communication system supports simultaneous deployment of two radio access systems, and allows communication between devices based on the two radio access systems, so that radio resource utilization can be improved, a system handover delay can be reduced, and user and system performance can be improved.

It can be understood that the 5G communication system is used as an example for description in (a) in FIG. 1 and (b) in FIG. 1. However, this application is not limited thereto. For example, the radio access system in the communication system 100c may include but is not limited to the following systems: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or a future evolved communication system (for example, a 6th generation (6th generation, 6G) system). For example, in the dual connectivity communication system, two same communication systems may be simultaneously deployed, or two different communication systems may be simultaneously deployed, for example, a long term evolution (long term evolution, LTE) system and a new radio (new radio, NR) system are simultaneously deployed. However, this is not limited in embodiments of this application.

As shown in (c) in FIG. 1, the communication system 100c may include one or more terminal devices 101, a master node (master node, MN) 102, a secondary node (secondary node, SN) 103, one or more other potential secondary nodes (other potential SNs) 104, and a core network 105. The master node 102 and the secondary node 103 (or the secondary node 104) may correspond to a same radio access system or different radio access systems.

It can be understood that the master node and the secondary nodes in the communication system 100c are all network devices. The master node 102 may be a network device during initial access of the terminal device 101, and is responsible for radio resource control (radio resource control, RRC) communication with the terminal device 101. A secondary node 203 may be added during RRC reconfiguration, and is configured to provide additional radio resources.

The terminal device 101 establishes connections to both the master node 102 and the secondary node 103, that is, the terminal device 101 can support simultaneous access to two different nodes. In addition, the terminal device 101 may further switch from the secondary node 103 to any one of the other potential secondary nodes 104. The master node 102 and the secondary node 103 may establish connections to the core network 105. For example, the master node 102 may transmit control information or user data to the core network 105 through a backhaul (backhaul) interface (for example, an N2 interface), and the secondary node 103 may transmit user data to the core network 105 through a backhaul (backhaul) interface (for example, an S1 interface). The master node 102 and the secondary nodes (including the secondary node 103 and other potential secondary nodes 204) may also communicate with each other.

The core network 105 may be a core network in any communication system. A 5G communication system is used as an example. The core network 205 includes a plurality of network function (network function, NF) entity network elements. For specific descriptions, refer to descriptions corresponding to (a) in FIG. 1 and (b) in FIG. 1. Details are not described herein again.

Because the terminal device 101 may simultaneously receive services of a plurality of cells of one node, a serving cell group provided by the master node 102 for the terminal device 101 may be referred to as a master cell group (master cell group, MCG), and a serving cell group provided by the secondary node 103 for the terminal device 101 may be referred to as a secondary cell group (secondary cell group, SCG). The MCG and the SCG each include at least one cell (cell). A primary cell (primary cell, PCell) exists in the master node 102, and a primary SCG cell (primary SCG cell, PSCell) (or referred to as a primary secondary cell) exists in the secondary node 103.

For ease of understanding embodiments of this application, the following describes some terms in this application by using examples. It can be understood that the following terms are described by using an existing NR system as an example. However, it should be understood that in other communication systems (for example, a future 6th generation communication system), the following terms may have other names. This is not limited in this application.

### 1. CPAC

Mobility of a terminal device may trigger a PSCell of the terminal device to change. That is, the terminal device may switch from one PSCell to another PSCell. It should be understood that the PSCell change may be that the terminal device switches from a cell of a secondary node to a cell of another secondary node, or may be that the terminal device switches from a cell of a secondary node to another cell of the secondary node. In addition, the PSCell change may be triggered by a master node, or may be triggered by a secondary node.

To enable the terminal device to quickly add or change a PSCell, a conditional PSCell addition/change (conditional PSCell addition/change, CPAC) mechanism is introduced. The CPAC includes a conditional PSCell addition (conditional PSCell addition, CPA) and a conditional PSCell change (conditional PSCell change, CPC). The CPA or the CPC is an addition or a change of a primary SCG cell (PSCell) of a secondary station in a DC scenario. A main concept is that a network configures a plurality of candidate PSCells cells, and each candidate PSCell cell configuration includes a configuration of a candidate cell and a corresponding execution condition. When the UE learns through evaluation that an execution condition of a candidate cell is satisfied, the UE may perform a PSCell addition or change.

For example, an implementation of the CPAC is as follows: A network side first configures a plurality of candidate PSCells, and notifies the terminal device of configurations of the plurality of candidate PSCells and an execution condition corresponding to each candidate PSCell. Subsequently, when determining that a candidate PSCell satisfies an execution condition corresponding to the candidate PSCell, the terminal device may directly access the candidate PSCell that satisfies the execution condition. In this way, the network side does not need to wait for the terminal device to report a measurement report before delivering a new PSCell configuration to the terminal device, so that a delay needed to add or change a PSCell can be shortened. In a scenario in which a secondary node triggers a PSCell change, a case in which a measurement report cannot be reported and a reconfiguration message cannot be delivered when signal quality of a PSCell quickly changes can be avoided. This improves robustness of the PSCell change.

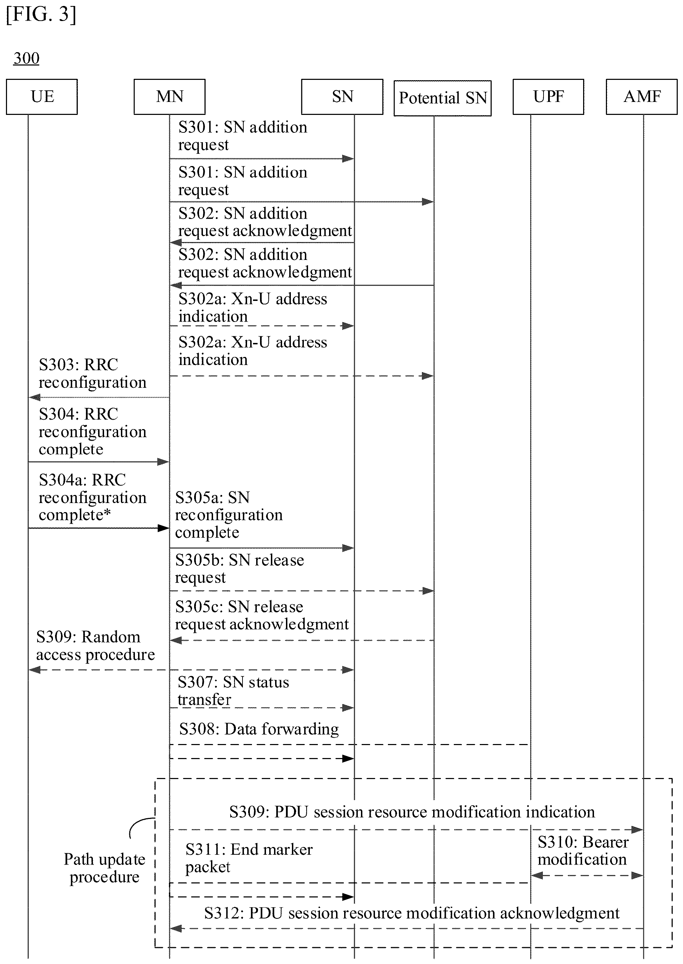

With reference to steps in FIG. 3, the following first briefly describes a CPA procedure provided in embodiments of this application. Only main steps are shown in this procedure. For a detailed procedure, refer to 3GPP TS 37.340.

S301: When determining to configure a CPA for UE, an MN sends an SN addition request (SN Addition Request) message to at least one candidate SN, where the SN addition request message is used to request the candidate SN to allocate resources. The SN addition request message includes a security parameter, and the security parameter is used to enable SRB3 establishment. In an example, the SN and other potential SNs shown in FIG. 3 are candidate SNs of the UE.

It can be understood that a quantity of candidate SNs is not limited in this application. To be specific, the MN may send the SN addition request message to only one SN, or may send the addition request message to at least two SNs. This is not limited in this application.

S302: After receiving the SN addition request message from the MN, the candidate SN sends an SN addition acknowledgment message to the MN after confirming that the resource request can be allowed.

Optionally, in S302a, the MN sends Xn user plane (Xn-U) address indication information to the candidate SN.

S303: The MN sends an RRC reconfiguration (RRC Reconfiguration) message to the UE, where the RRC reconfiguration message includes a CPA configuration.

For example, the CPA configuration includes one or more pieces of candidate SCG configuration information and an execution condition associated with each piece of candidate SCG configuration information, and the SCG configuration is from the SN. Each candidate SCG configuration includes an SN counter. That is, a conditional configuration corresponding to the SN includes the SN counter. An SN counter value is carried in an Sk-counter information element.

For example, information about the CPA configuration includes SCG configuration (SCG configuration) information of one or more candidate PSCells and an execution condition associated with the one or more pieces of SCG configuration information. It can be understood that each piece of SCG configuration information corresponds to one PSCell, and therefore each PSCell has a corresponding execution condition.

S304: After receiving the RRC reconfiguration message from the MN, the UE returns an RRC reconfiguration complete (RRC Reconfiguration complete) message to the MN. The UE uses an RRC configuration other than the CPA configuration in the RRC reconfiguration message.

S304a: The UE starts to evaluate the execution condition associated with the SCG configuration information. If an execution condition of a candidate PSCell cell is satisfied, the UE uses a configuration of the selected candidate PSCell in the RRC reconfiguration message (a configuration associated with the execution condition), and sends the RRC reconfiguration complete message to the MN. The RRC reconfiguration complete message includes an RRC reconfiguration complete message of the selected candidate PSCell, and information that enables the MN to identify the selected candidate PSCell.

S305a: The MN sends an SN reconfiguration complete message to the SN, where the SN reconfiguration complete message is used to notify the SN in which the selected PSCell is located that the UE successfully completes a reconfiguration procedure.

Optionally, in S305b, if other candidate SNs are configured, the MN sends SN release request messages to the other candidate SNs. After receiving the SN release request message, the candidate SN returns an SN release acknowledgment message to the MN in S305c.

S306: The UE performs synchronization with a target PSCell (the foregoing selected candidate PSCell/the candidate cell that satisfies the execution condition). The synchronization may be implemented through a random access procedure. A detailed procedure is not limited in this application. It can be understood that a sequence in which the UE sends the RRC reconfiguration complete message and performs the random access procedure is not limited in this application.

S307: The MN sends an SN status transfer message to the SN.

S308: The MN performs data forwarding to the target SN.

S309 to S312: Perform a path update procedure. A detailed procedure is not limited in this application.

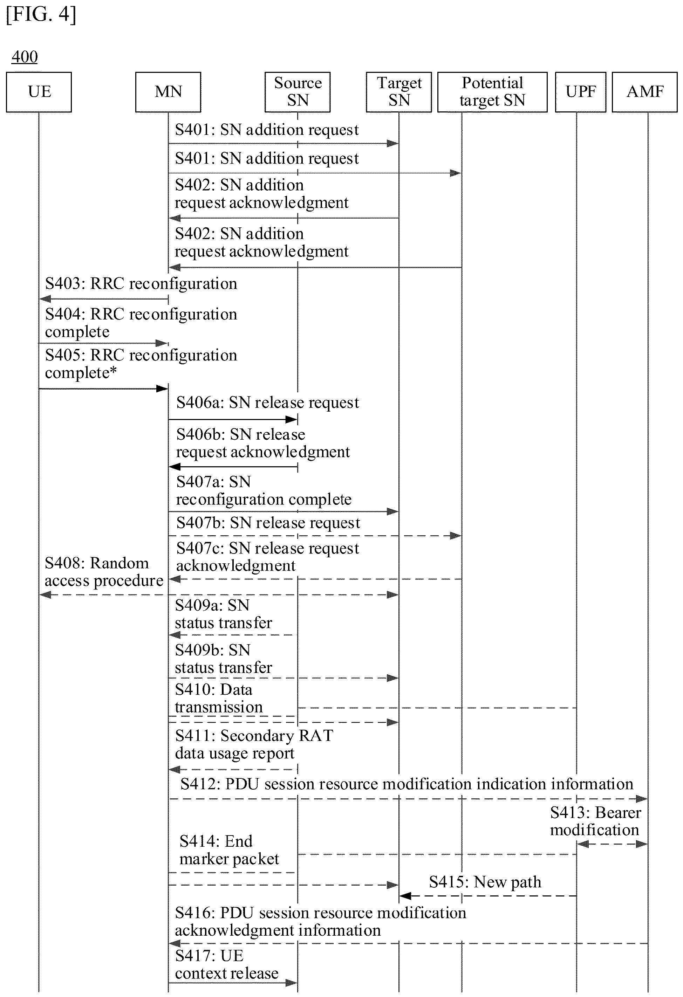

With reference to steps in FIG. 4, the following briefly describes a CPC procedure provided in embodiments of this application. Only main steps are shown in this procedure. For a detailed procedure, refer to 3GPP TS 37.340.

It can be understood that a source SN shown in FIG. 4 is an SN currently accessed by UE, and a target SN shown in FIG. 4 is a candidate SN of the UE, that is, a to-be-accessed SN.

S401: When determining to initiate a CPC procedure, an MN sends an SN addition request (SN Addition Request) message to at least one candidate SN, where the SN addition request message is used to request the candidate SN to allocate resources, and the like.

S402: The SN in which a candidate cell is located sends an SN addition request acknowledgment (SN Addition Request Acknowledge) message to the MN after confirming that the resource request can be allowed.

S403: The MN sends an RRC reconfiguration message to the UE, where the RRC reconfiguration message includes a CPC configuration. The CPC configuration includes one or more pieces of candidate SCG configuration information and an execution condition associated with each piece of SCG configuration information. An SCG configuration is from a candidate target SN.

S404: After receiving the RRC reconfiguration message from the MN, the UE returns an RRC reconfiguration complete message to the MN. The UE uses an RRC configuration other than the CPC configuration in the RRC reconfiguration message.

S405: The UE starts to evaluate the execution condition. If an execution condition of a candidate cell is satisfied, the UE uses a configuration of the selected candidate PSCell in the RRC reconfiguration message, and returns the RRC reconfiguration complete message to the MN. The RRC reconfiguration complete message includes an RRC reconfiguration complete message of the selected candidate PSCell, and information that enables the MN to identify the selected candidate PSCell.

It may be understood that the candidate SCG configuration information herein corresponds to the candidate PSCell. Therefore, the execution condition associated with the SCG configuration information can also be understood as an execution condition corresponding to one or more candidate PSCells.

S406a: The MN sends an SN release request message to the source SN, to indicate the source SN to stop data transmission with the UE.

S406b: After receiving the SN release request message from the MN, the source SN sends an SN release request acknowledgment message to the MN.

S407a: The MN sends an SN reconfiguration complete message to the target SN, to notify the SN in which the selected candidate PSCell is located that a reconfiguration procedure is completed.

Optionally, in S407b, if other candidate SNs are configured, the MN sends SN release request messages to the other candidate SNs. After receiving the SN release request message, the candidate SN returns an SN release acknowledgment message to the MN in S407c.

S408: The UE performs synchronization with a target PSCell (the foregoing selected candidate PSCell/the candidate cell that satisfies the execution condition). The synchronization may be implemented through a random access procedure.

S409a and S409b: Optionally, the source SN sends SN status transfer to the target SN through the MN.

S410: Optionally, the MN performs data forwarding to the target SN.

S411 to S417: Perform a path switch procedure. A specific process is not limited in this application.

### 2. Selective SCG activation

In a CPAC procedure, UE releases a CPAC configuration after completing a random access procedure with a target PSCell. Therefore, before network reconfiguration or network restart, the UE cannot perform a subsequent CPAC procedure to add/change a PSCell.

If a PSCell needs to be added or changed, the network needs to reconfigure a cell configuration corresponding to the candidate PSCell. To reduce delays and signaling overheads caused by a plurality of SCG changes, the selective SCG activation (Selective SCG activation) is introduced. After an SCG change is allowed and before the network reconfiguration, the UE may continue to use a previously stored candidate PSCell cell configuration, which may also be referred to as a candidate secondary cell group configuration or a primary secondary cell configuration.

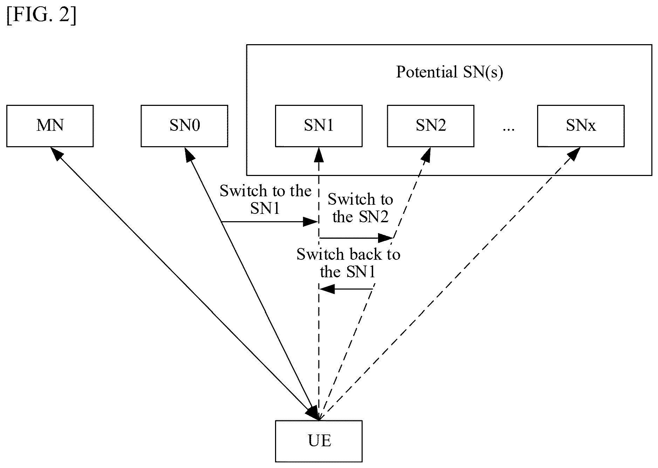

FIG. 2 shows a possible example of selective SCG activation. In this example, a network configures one or more candidate PSCell cell configurations of a plurality of candidate SNs for the UE. The candidate SNs may include an SN1, an SN2, ..., an SNx.

If the UE detects that a configuration execution condition corresponding to a candidate PSCell served by the SN1 is satisfied, the UE switches to or accesses a cell served by the SN1. After the UE is connected to the SN1, the UE does not release the candidate PSCell cell configuration, that is, continues to maintain the PSCell cell configuration, and performs a PSCell cell change procedure.

The UE may continue to perform condition evaluation (that is, evaluate whether an execution condition for accessing a new PSCell is satisfied). When an execution condition of another candidate PSCell is satisfied, the UE triggers a change procedure. For example, the UE switches from the PSCell served by the SN1 to a PSCell served by the SN2, or the UE switches from the PSCell 1 served by the SN1 to a PSCell 2. It may be understood that after switching to the PSCell served by the SN2, the UE may further switch back to the PSCell served by the SN1.

It can be understood that the foregoing procedure is an example, but this application is not limited thereto. Alternatively, when an SN0 is not established, an MN may perform a conditional PSCell addition procedure, and subsequently perform a conditional change procedure based on configuration information of a PSCell.

### 3. PDU split

The PDU split means that some services of a PDU session are transmitted by a master node, and some services of the PDU session are transmitted by a secondary node.

### 4. SRB3

The SRB3 is a signaling radio bearer between UE and an SN.

### 5. Primary SCG cell (PSCell)

The PSCell is an SCG cell that is randomly accessed by UE when the UE performs a synchronous reconfiguration procedure for a dual connectivity operation.

### 6. Secondary cell group (SCG)

The SCG is a serving cell subset including a PSCell and zero or more secondary cells.

### 7. Secondary cell (Secondary Cell)

The secondary cell is a cell that provides additional radio resources on a special cell for UE configured with carrier aggregation (carrier aggregation, CA).

### 8. Communication key

The communication key in embodiments of this application is a key used to protect air interface communication security between devices. For example, a communication key between UE and an SN is used to protect communication security between the UE and the SN. In an example, the communication key includes a signaling plane key (which may also be referred to as an RRC key) and/or a user plane key (UP key). The signaling plane key is used to protect security of a signaling plane message transmitted between devices, and the user plane key is used to protect security of user plane data transmitted between devices. The signaling plane key may include a signaling plane integrity protection key K_{RRCint} and/or a signaling plane encryption/decryption key K_{RRCenc}. K_{RRCint} is used to prevent the signaling plane message from being tampered with, and K_{RRCenc} is used to prevent leakage of the signaling plane message. The user plane key may include a user plane integrity protection key K_{UPint} and/or a user plane encryption/decryption key K_{UPenc}. K_{UPint} is used to prevent the user plane data from being tampered with, and K_{UPenc} is used to prevent leakage of the user plane data.

In a dual connectivity scenario, security protection includes control plane security protection and user plane security protection. Control plane security protection between the UE and an MN is based on a signaling plane key (for example, an integrity protection key K_{RRCint} and an encryption/decryption key K_{RRCenc}) derived from K_{gNB}. User plane security protection between the UE and the MN is based on a user plane key (for example, an integrity protection key K_{UPint} and/or an encryption/decryption key K_{UPenc}) derived from K_{gNB}.

The communication key is used to generate a key stream for encryption of air interface communication data between devices. The key stream is generated based on parameters such as the communication key, a count value (COUNT), a bearer identifier (BEARER), a direction (DIRECTION), and a length (LENGTH).

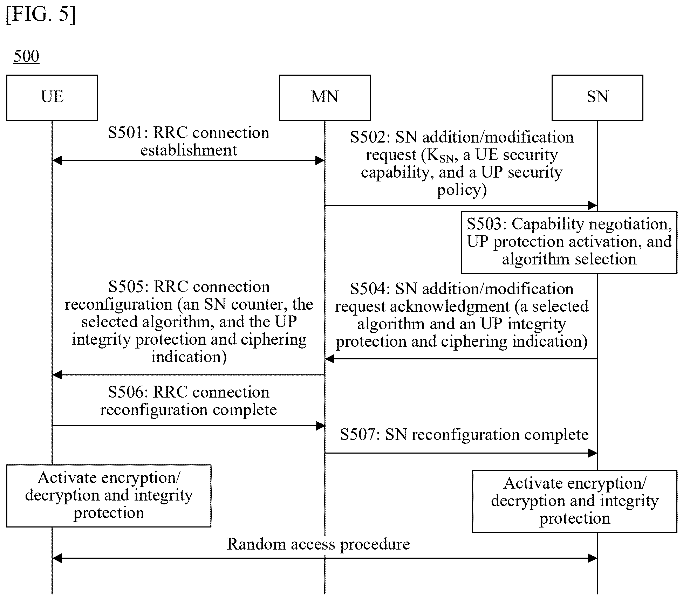

Control plane security protection between the UE and the SN is based on a signaling plane key (for example, an integrity protection key and an encryption/decryption key) derived from K_{SN}. User plane security protection between the UE and the SN is based on a user plane key (for example, an integrity protection key and an encryption/decryption key) derived from K_{SN}. The SN determines whether to enable user plane security protection between the UE and the SN. In other words, the UE and the MN may derive, by using K_{gNB}, the communication key used to protect communication security between the UE and the MN, and the UE and the SN may derive, by using K_{SN}, the communication key used to protect communication security between the UE and the SN. The following describes a security establishment procedure between UE and an SN with reference to FIG. 5.

S501: Establish an RRC connection between the UE and an MN. A detailed procedure is not limited in this application.

S502: The MN sends an SN addition/modification request message to the SN, where the request message is used to negotiate an available resource, a configuration, and an algorithm used by the SN. If new K_{SN} is required, the MN generates K_{SN} and sends K_{SN} to the SN by using the SN addition/modification request message. The SN addition/modification request further includes a UE security capability and a UP security policy. In a PDU split scenario, the SN addition/modification request may further include a user plane integrity protection and ciphering activation decision.

The MN maintains a 16-bit SN counter in an access layer security context. When the MN derives K_{SN}, the SN counter is used as one of inputs. For example, input parameters for the MN to derive K_{SN} include K_{gNB}, the SN counter, a length of the SN counter, and the like.

The MN needs to maintain the SN counter in the access stratum security context, but the UE does not need to maintain the SN counter, because the MN provides the UE with a current SN counter when the UE needs to compute new K_{SN}. If the MN determines to release a connection to the SN and then restarts a connection to the same SN, the SN counter should continue to increase, to ensure that the computed K_{SN} is new.

S503: The SN allocates necessary resources and selects a security algorithm. If the SN receives new K_{SN}, the SN uses new K_{SN} to compute a required RRC key and UP key.

When the SN derives the UP key, in a non-PDU split scenario, the SN may determine to derive the UP key based on the received UP security policy. For example, the SN derives a corresponding key only when determining to activate user plane integrity protection or/or ciphering. In a PDU split scenario, the SN may determine a derived key based on the received user plane integrity protection and ciphering activation decision, for example, derive a corresponding key only when the activation policy indicates to perform activation.

S504: The SN sends an SN addition/modification acknowledgment message to the MN, where the acknowledgment message indicates availability of the requested resources, an identifier for the selected algorithm, and a UP integrity protection and ciphering indication to the MN.

S505: The MN sends an RRC reconfiguration request message to the UE, where the request message indicates the UE to configure a new data radio bearer (data radio bearer, DRB) and/or signaling radio bearer (signal radio bearer, SRB) for the SN. The request message includes an SN counter, the SN counter indicates the UE to derive new K_{SN}, and the request message further includes an algorithm identifier, and a UP integrity protection and ciphering indication.

S506: After successfully receiving the RRC reconfiguration message, the UE sends an RRC reconfiguration complete message to the MN. If the RRC reconfiguration message includes the SN counter, the UE derives K_{SN} based on the received SN counter, derives RRC and UP keys for communication security between the UE and the SN based on K_{SN}, and activates RRC protection and user plane protection based on the received indication.

It may be understood that algorithms and input parameters used by the UE and the MN to derive K_{SN} are the same. Therefore, K_{SN} derived by the UE is the same as K_{SN} sent by the MN to the SN. In addition, algorithms and input parameters used by the UE to derive the RRC key and the UP key (that is, the communication key) by using K_{SN} are also the same. Therefore, the RRC key and the UP key (that is, the communication key) derived by the UE and the SN are also the same.

S507: The MN sends an SN reconfiguration complete message to the SN, and the SN may activate encryption/decryption and integrity protection between the SN and the UE after receiving the message. If the SN has not activated encryption/decryption and integrity protection at this stage, the SN needs to activate encryption/decryption and integrity protection when receiving a random access request from the UE.

After the foregoing procedure, both the UE and the SN obtain same K_{SN}, and derive a same RRC key and a same UP key by using same K_{SN}, so that security protection is performed for communication between the UE and the SN by using the same RRC key and the same UP key.

However, in the method procedure shown in FIG. 5, only a procedure of establishing security between the UE and the SN in a procedure scenario in which the MN adds or modifies one SN is defined. In a selective SCG activation scenario, there may be a plurality of candidate SNs, and each SN may be configured with a plurality of candidate SCGs. If a secure connection is established based on an existing procedure, the MN may provide same K_{SN} for different candidate SNs, or provide same K_{SN} for a plurality of candidate SCGs served by a same SN. Therefore, key isolation cannot be supported. In addition, when the UE accesses a same SN or a same SCG with same K_{SN} at different moments, security protection keys derived based on same K_{SN} are the same, and parameters used to generate key streams may be repeated. This further causes key stream reuse. Therefore, how to establish a secure connection between the UE and the SN in the selective SCG activation scenario needs to be considered.

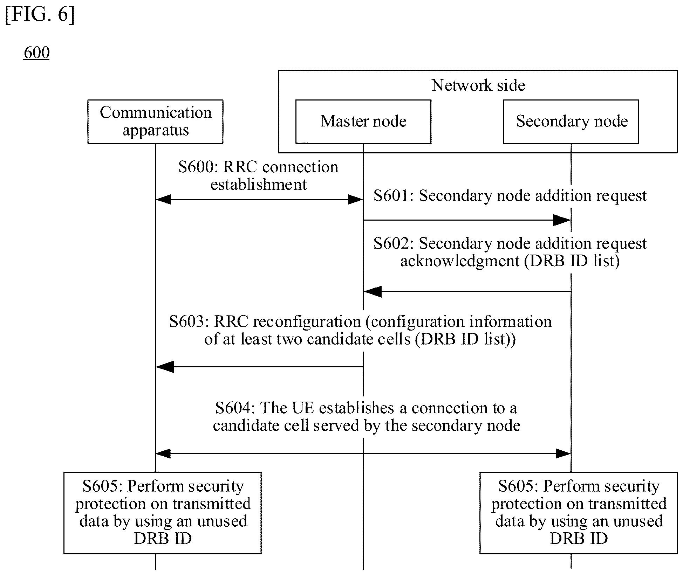

To resolve the foregoing problem, this embodiment provides the following solution. FIG. 6 is a flowchart of an example of a method according to this application. The method includes the following steps.

S600: An RRC connection is established between a communication apparatus and a master node.

Specifically, for a detailed RRC connection establishment procedure, refer to 3GPP TS 38.331.

S601: The master node sends a secondary node addition request message to a secondary node. Correspondingly, the secondary node receives the secondary node addition request message from the master node.

In a possible implementation, when the master node determines to configure selective SCG activation for the communication apparatus, the secondary node addition request message includes selective SCG activation indication information. The selective SCG activation indication information may be a newly added IE, or a new value is assigned to an existing IE. This is not limited in this application (for details, refer to step S701 in the method 700).

In another possible implementation, the secondary node addition request message further includes a root key. In a possible implementation, the root key is only for one candidate cell served by the secondary node (for details, refer to step S801 in the method 800). In another possible implementation, the root key is for all candidate cells served by the secondary node, which may be understood as: all candidate cells served by the secondary node use the root key (for details, refer to step S901 in the method 900).

S602: The secondary node sends a secondary node addition request acknowledgment message to the master node. Correspondingly, the master node receives the secondary node addition request acknowledgment message from the secondary node.

The secondary node addition request acknowledgment message includes a determined candidate cell and a DRB ID list. The DRB ID list is used to represent at least two DRB IDs of each DRB in the candidate cell (for details, refer to step S702 in the method 700). In another possible implementation, the DRB ID in a corresponding configuration varies between different candidate cells served by the secondary node. Therefore, the DRB ID list is used to represent at least two DRB IDs of each DRB of all candidate cells served by the secondary node (for details, refer to step S902 in the method 900).

S603: The master node sends a reconfiguration message to the communication apparatus. Correspondingly, the communication apparatus receives the reconfiguration message from the master node.

The reconfiguration message includes configuration information of a candidate cell, and the configuration information of the candidate cell includes a count value corresponding to the candidate cell and a DRB ID list corresponding to a DRB.

In a possible implementation, before the master node sends the reconfiguration message to the communication apparatus, the master node generates M root keys corresponding to M (M>=1) candidate cells determined by the secondary node, and sends the M root keys corresponding to the M candidate cells to the secondary node (for details, refer to steps S703 and S704 in the method 700).

In another possible implementation, before the master node sends the reconfiguration message to the communication apparatus, after the master node receives the secondary node addition request acknowledgment message from the secondary node, the master node determines whether to further provide the secondary node with a root key corresponding to a candidate cell. Specifically, when the secondary node provides N (N>=2) candidate cells, the master node generates N-1 root keys corresponding to the N candidate cells determined by the secondary node, and sends the N-1 root keys corresponding to the N candidate cells to the secondary node. When N=1, the master node does not need to further provide the root key for the secondary node (for details, refer to steps S803 and S804 in the method 800).

In another possible implementation, before the master node sends the reconfiguration message to the communication apparatus, the master node sends a root key corresponding to the secondary node to the secondary node in step S601. The root key is shared by all candidate cells of the secondary node (for details, refer to step S901 in the method 900).

In a possible implementation, the reconfiguration message further includes an execution condition corresponding to configuration information of each candidate cell.

S604: The communication apparatus establishes a connection to a selected candidate cell.

In a possible implementation, when determining that a first candidate cell satisfies a corresponding execution condition, the communication apparatus chooses to establish a connection to the first candidate cell.

In a possible implementation, before establishing a connection to the selected candidate cell, the communication apparatus sends a reconfiguration complete message to the master node.

S605: The communication apparatus selects a DRB ID that is not used in a DRB ID list, to protect communication data that is transmitted between the communication apparatus and the first candidate cell through a DRB.

For example, when communication data is transmitted between the communication apparatus and the first candidate cell through a plurality of DRBs, all the plurality of DRBs are DRB IDs that are not used.

Security protection is performed for a first DRB by using an unused DRB ID, to protect communication data transmitted between the communication apparatus and the first candidate cell through the first DRB.

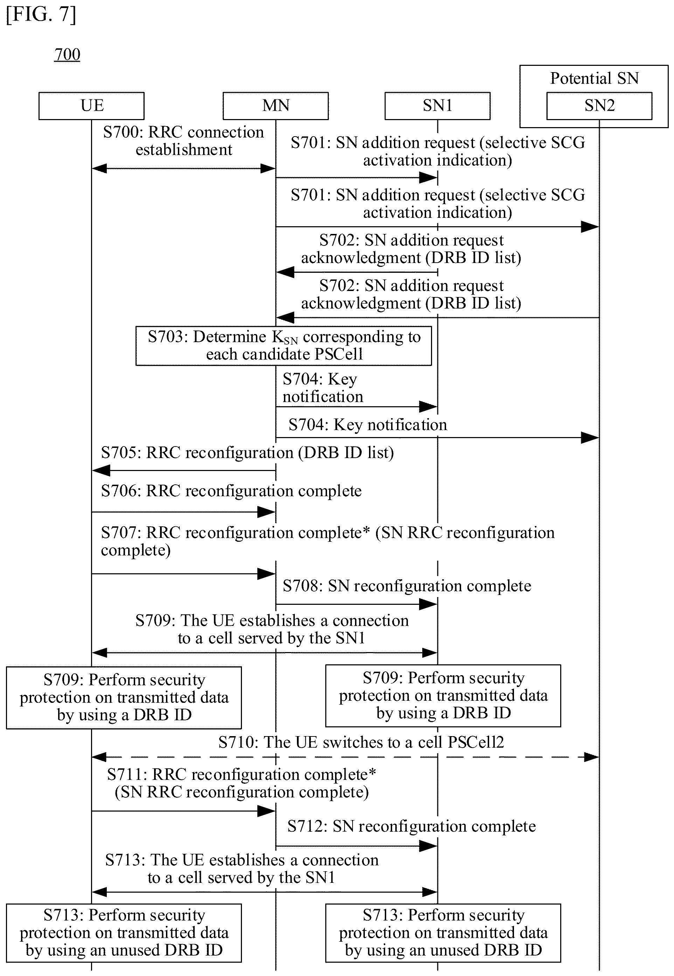

FIG. 7 is a flowchart of an example of a method 700 according to an embodiment of this application. The following provides example descriptions of the method 700 with reference to steps in FIG. 7.

S700: An RRC connection is established between UE and an MN.

Specifically, for a detailed RRC connection establishment procedure, refer to 3GPP TS 38.331.

S701: The MN sends an SN addition request message to a candidate SN. Correspondingly, the candidate SN receives the SN addition request message from the MN.

For example, when determining to configure selective SCG activation for the UE, the MN separately sends an SN addition request to a candidate SN1 and another candidate SN. It can be understood that the another candidate SN in this embodiment of this application includes one or more SNs other than the SN1. For ease of description, in this embodiment of this application, an example in which an SN2 is the another candidate SN is used for description. However, this application is not limited thereto.

It should be noted that, when it is determined to initiate selective SCG activation, the SN addition request message includes a UE security capability, a UE security policy, an available DRB ID list, and selective SCG activation indication information. The selective SCG activation indication information indicates that a current procedure is a selective SCG activation procedure. The selective SCG activation indication information may be a newly added IE, or a new value is assigned to an existing IE. This is not limited in this application.

Optionally, in a PDU split scenario, the SN addition request message further includes a user plane integrity protection and ciphering activation decision that is of a PDU session and that is determined by the MN.

It may be understood that the SN addition request message does not carry a key K_{SN} of the candidate SN. That is, the MN may skip derivation of K_{SN}.

S702: The SN1 sends an SN addition request acknowledgment message to the MN. Correspondingly, the MN receives the SN addition request acknowledgment message from the SN1.

The SN1 selects, based on the received UE security capability in S601, a to-be-used security algorithm, and determines, based on the UE security policy, whether to enable user plane security protection (ciphering and/or integrity protection). The SN addition request acknowledgment message includes a radio bearer configuration, the security algorithm selected by the SN1, a user plane security protection indication, and a DRB ID list.

If the DRB ID list includes a DRB terminated on the SN1 and user plane security protection (ciphering and/or integrity protection) is enabled, the SN1 generates, for each determined candidate PSCell, a first identifier list corresponding to a first DRB corresponding to the candidate PSCell. The first identifier list includes at least two DRB IDs used to represent the first DRB. In this case, the DRB ID list is equivalent to the first identifier list.

It should be noted that, when the candidate PSCell includes N (N>=2) DRBs, a relationship between the DRB ID list and the first identifier list is shown as follows:
Relationship 1: The DRB ID list includes N identifier lists, and the first identifier list is a list in the N identifier lists. The SN1 separately generates N identifier lists corresponding to the N DRBs. Each identifier list includes at least two DRB IDs used to represent each of the N DRBs. It may be understood that one identifier list is generated for each DRB.
Relationship 2: The DRB ID list is an identifier list corresponding to the N DRBs, and the DRB ID list includes the first identifier list. The SN1 generates the identifier list corresponding to the N DRBs, that is, the DRB ID list. The DRB ID list includes DRB IDs used to represent the N DRBs. It may be understood that a DRB ID corresponding to each DRB is selected from the DRB ID list.

In this embodiment of this application, the SN1 may generate the DRB ID list in any one of the following manners:
Manner 1: The DRB ID list includes a default DRB ID corresponding to each DRB, and corresponds to at least one candidate DRB ID. The default DRB ID may be understood as an initial ID of the DRB.

When the relationship 1 exists between the DRB ID list and the first identifier list, the SN1 separately generates N corresponding identifier lists for the N DRBs in the candidate PSCell. For each DRB ID, each of the N identifier lists includes a default DRB ID and at least one candidate DRB ID. In this case, the DRB ID list includes the N identifier lists.

When the relationship 2 exists between the DRB ID list and the first identifier list, the SN1 generates an identifier list corresponding to the N DRBs in the candidate PSCell, that is, the DRB ID list. In the DRB ID list, there is a default DRB ID for each DRB, and there is a candidate DRB ID list for the N DRBs. That the candidate DRB ID list corresponds to the N DRBs may be understood as: A candidate DRB ID of each DRB is selected from the candidate DRB ID list. It should be noted that the DRB ID list may include the default DRB ID and the candidate DRB ID list, or the DRB ID list includes only the candidate DRB ID list. This is not limited. It may be understood that a DRB ID used when the UE initially accesses a PSCell served by the SN1 is a default DRB ID, and a candidate DRB ID is a DRB ID that can be selected when the UE accesses the same PSCell again. A rule for selecting the candidate DRB ID may be preconfigured, and the preconfigured rule is the same on a UE side and an SN1 side. For example, the preconfigured rule may be replacing in ascending order of candidate DRB IDs, or based on a sequence relationship between DRB IDs in a received message.

For example, a DRB list of DRB IDs is 1, 4, and 3. A default ID of the DRB is 1, and a candidate ID list of the DRB is 4 and 3. When the UE accesses a PSCell#1 served by the SN1 for the first time, a used DRB ID is a default DRB ID value 1. According to the preconfigured rule of replacing candidate DRB IDs in ascending order, 3 is smaller than 4, and therefore 3 is used first. When the UE accesses the PSCell#1 for the second time, a used DRB ID is a candidate DRB ID value 3. Similarly, when the UE accesses the PSCell#1 for the third time, a used DRB ID is a candidate DRB ID value 4. Alternatively, according to the preconfigured rule based on the sequence relationship between DRB IDs in the received message, 4 is before 3. Therefore, 4 is first used. That is, when the UE accesses the PSCell#1 for the second time, a used DRB ID is the candidate DRB ID value 4.

Manner 2: The DRB ID list includes at least two corresponding candidate DRB IDs for each DRB.

When the relationship 1 exists between the DRB ID list and the first identifier list, the SN1 separately generates N corresponding identifier lists for the N DRBs in the candidate PSCell. For each DRB ID, each of the N identifier lists includes at least two candidate DRB IDs. In this case, the DRB ID list includes the N identifier lists.

When the relationship 2 exists between the DRB ID list and the first identifier list, the SN1 generates an identifier list corresponding to the N DRBs in the candidate PSCell, that is, the DRB ID list. There are at least 2N candidate DRB IDs for the N DRBs in the DRB ID list. It may be understood that a DRB ID of each DRB is selected from the DRB ID list.

A rule for selecting the candidate DRB ID may be preconfigured, and is the same as the preconfigured rule in Manner 1. Details are not described herein again. It may be understood that a DRB ID used when the UE initially accesses a same PSCell served by the SN1 and accesses the same PSCell served by the SN1 again is determined according to the preconfigured rule.

For example, there are two DRBs between the UE and the SN, and a sequence of IDs in a DRB list generated by the SN1 is 2, 1, 4, and 3. According to the preconfigured rule of replacing in ascending order of candidate DRB IDs, when the UE accesses the PSCell#1 served by the SN1 for the first time, DRB IDs used by the UE are separately 1 and 2. When the UE accesses the PSCell#1 for the second time, used DRB IDs are separately 3 and 4. Alternatively, according to the preconfigured rule based on the sequence relationship between the DRB IDs in the received message, when the UE accesses the PSCell#1 served by the SN1 for the first time, used DRB IDs are separately 2 and 1. When the PSCell#1 is accessed for the second time, used DRB IDs are separately 4 and 3.

Similarly, an SN2 sends an SN addition request acknowledgment message to the MN.

It should be noted that, that the candidate SN determines at least two candidate PSCells may be that the SN1 determines at least two candidate PSCells, or may be that the SN1 and the SN2 each determine at least one candidate PSCell. This is not limited in this embodiment.

S703: After the MN receives the SN addition request acknowledgment message from the candidate SN, the MN generates K_{SN} corresponding to each candidate SN. If one SN provides a plurality of PSCells, the MN generates different K_{SN} for each PSCell. K_{SN} corresponding to a PSCell is derived based on a value of an SK counter. Further, the MN stores a relationship between the SK counter and a corresponding PSCell configuration.

In an example, the MN may generate corresponding K_{SN} for N PSCells in the following manner: The MN side has an initial SK counter, and then the MN sequentially increases the initial SK counter value by fixed values, to obtain N different SK counter values. Then, N root keys for the N PSCells are derived by using the N SK counter values (for example, if an initial SK counter value is 7, and an increased fixed value is 1, a next SK counter value is 8; if an increased fixed value is 2, a next SK counter value is 9; and the fixed values are sequentially added to obtain the N SK counters).

A manner in which the MN obtains the SK counter is not limited in this application. In a possible example, the MN obtains the SK counter from an AS context.

S704: The MN sends a key notification message to the candidate SN, where the key notification message includes K_{SN} corresponding to the candidate SN. Correspondingly, the candidate SN receives the key notification message from the MN.

If a single candidate SN provides a plurality of candidate PSCells, the MN sends a plurality of K_{SN} for the plurality of candidate PSCells to the SN. It should be noted that the MN may send the plurality of K_{SN} to the SN by using one message or by using a plurality of messages. Each message carries at least one K_{SN}. This is not limited. In this case, the key notification message includes K_{SN} of each PSCell and an identifier of corresponding candidate information. The identifier of the candidate information is used by the SN to determine the PSCell corresponding to K_{SN}. In this way, when the UE accesses the PSCell subsequently, the SN may determine K_{SN} that needs to be used.

S705: The MN sends an RRC reconfiguration message to the UE. Correspondingly, the UE receives the RRC reconfiguration message from the MN. The RRC reconfiguration message includes configuration information of at least two candidate PSCells.

The MN generates the RRC reconfiguration message based on the stored relationship between the SK counter and the corresponding PSCell configuration. The RRC reconfiguration message includes the SK counter and the corresponding PSCell configuration. The SK counter is stored by the MN in step S703. Different SK counters corresponding to different PSCells are derived, and the SK counter is used to generate K_{SN} shared between the UE and the PSCell. The PSCell configuration includes an algorithm selected by the SN and an identifier list. An identifier list for each DRB is generated in step S702. The identifier list may be a default DRB ID and at least one candidate DRB ID in Manner 1, or may be at least two candidate DRB IDs in Manner 2. Alternatively, when the candidate PSCell includes N DRBs, the DRB ID list is a set of the N identifier lists generated in step S702.

Optionally, the RRC reconfiguration message further includes an execution condition associated with a corresponding PSCell. When the execution condition corresponding to the PSCell is satisfied, the UE may select the PSCell.

It may be understood that a sequence of performing S704 and S705 is not limited in this application.

S706: The UE sends an RRC reconfiguration complete message to the MN. Correspondingly, the MN receives the RRC reconfiguration complete message from the UE.

For example, after receiving the RRC reconfiguration message from the MN, the UE processes the RRC reconfiguration message and sends the RRC reconfiguration complete message to the MN. A specific process is not limited in this application.

S707: The UE starts to evaluate a candidate cell, and determines whether an execution condition corresponding to a candidate cell is satisfied. If the UE detects a candidate cell that satisfies the execution condition, the UE sends an RRC reconfiguration complete message* to the MN. Correspondingly, the MN receives the RRC reconfiguration complete message* from the UE. The RRC reconfiguration complete message* includes information about an SN of the candidate cell selected by the UE, and the information may be a conditional reconfiguration identifier. The MN determines a target SN (namely, the SN1) based on the information about the SN of the candidate cell.

It may be understood that each conditional reconfiguration is associated with one candidate PSCell. Therefore, for the conditional reconfiguration, each candidate PSCell has an associated execution condition.

For example, a candidate cell selected by the UE is a PSCell#1. In this embodiment of this application, an SN corresponding to the PSCell#1 is denoted as the SN1. It may be understood that the candidate cell selected by the UE in this embodiment of this application is a candidate PSCell that satisfies the execution condition and that is detected by the UE. Similar parts are not described again subsequently.

After determining the candidate cell, the UE derives K_{SN} by using an SK counter in a conditional reconfiguration corresponding to the candidate cell, and further derives a signaling plane key and a user plane security key based on configuration information by using K_{SN}. A specific process is not limited in this application. Alternatively, if the MN includes the SK counter in the RRC reconfiguration message, the UE may derive K_{SN} by using the SK counter. The SK counter is included in a location other than the conditional reconfiguration.

S708: The MN sends the SN reconfiguration complete message to the SN1. Correspondingly, the SN 1 receives the SN reconfiguration complete message from the MN. The reconfiguration complete message includes an identifier of candidate information of the PSCell#1 selected by the UE. After receiving the SN reconfiguration complete message from the MN, the SN1 determines the PSCell and corresponding K_{SN} based on the identifier of the candidate information.

S709: The UE establishes a connection to the selected PSCell#1 served by the SN1.

After the connection is established, the UE and the SN1 perform security protection on transmission data by using a DRB ID in the DRB ID list determined in step S702. Specifically, for each radio bearer, during user plane data security protection, a default DRB ID in Manner 1 corresponding to each bearer is used as an input parameter, or a DRB ID selected in Manner 2 is used as an input parameter.

On the UE side, the UE derives K_{SN} by using the SK counter corresponding to the selected PSCell#1 and a master node key, and further derives a user plane security protection key based on K_{SN}. The user plane security protection key may be at least one of an encryption key and an integrity protection key. On the SN1 side, the SN1 derives the user plane security protection key by using K_{SN} corresponding to the PSCell#1.

It may be understood that because K_{SN} used on the UE side is the same as that used on the SN1 side, the SN1 and the UE derive a same communication key based on same K_{SN}. Communication security between the SN1 and the UE may be protected by using the communication key.

S710: The UE continuously performs candidate cell evaluation, and determines that an execution condition for accessing another cell PSCell#2 is satisfied. The PSCell#2 may be another cell that is served by the SN1 and that is different from the PSCell#1, or may be a cell that is served by another SN different from the SN1.

It should be noted that, after determining to switch to another cell, the UE sets the currently used DRB ID as used, or deletes the currently used DRB ID from the DRB ID list. Similarly, after determining that the UE releases the connection, the SN1 sets the currently used DRB ID as used, or deletes the currently used DRB ID from the DRB ID list. The currently used DRB ID is the DRB ID used when the UE communicates with the PSCell#1 in step S709. Optionally, the UE and the SN 1 separately store the user plane security protection keys.

A procedure in which the UE accesses the another cell PSCell#2 is the same as a procedure in which the UE accesses the PSCell#1 for the first time, that is, steps S707 to S709. Details are not described herein again.

It should be noted that a DRB ID used by the PSCell#2 may be the same as the DRB ID used in initial access to the PSCell#1. This is because K_{SN} is different for different candidate PSCells. Therefore, user plane security protection keys derived by using K_{SN} are different, so that different key streams can still be derived when DRB IDs are the same.

S711: The UE continuously performs candidate cell evaluation, and determines that an execution condition for accessing the original cell PSCell#1 served by the SN1 is satisfied. The UE sends an RRC reconfiguration complete message* to the MN. Correspondingly, the MN receives the RRC reconfiguration complete message* from the UE. For related features, refer to step S707. Details are not described herein again.

Optionally, the RRC reconfiguration complete message* further includes a DRB ID. The DRB ID is a DRB ID to be used between the UE and the PSCell#1. Specifically, for each DRB, a default DRB ID is used when the UE initially accesses the PSCell#1. When the UE leaves the PSCell#1 and switches to another PSCell, the used DRB ID is deleted or is marked as used. When the UE subsequently accesses the PSCell#1 again, the UE selects a to-be-used DRB ID from remaining candidate DRB IDs in the DRB ID list, and further sends the DRB ID to the SN1 through the MN. It should be noted that this step is used when the DRB ID is not determined according to the preconfigured rule.

S712: The MN sends an SN reconfiguration complete message to the SN1. Correspondingly, the SN1 receives the SN reconfiguration complete message from the MN. For related features, refer to step S708. Details are not described herein again.

Optionally, the SN reconfiguration complete message further includes a DRB ID, and the DRB ID is a DRB ID selected and reported by the UE.

S713: The UE establishes a connection to the selected PSCell#1 served by the SN1.

After the connection is established, security protection is performed on transmitted data between the UE and the SN1 based on remaining candidate DRB IDs in the DRB ID list. The candidate DRB IDs are DRB IDs that are not used in the DRB ID list. Specifically, the UE and the SN1 respectively select remaining candidate DRB IDs from the DRB list according to a same pre-configured rule. For a selection method, refer to step S702. Details are not described herein again. For each radio bearer, when user plane data security protection is performed, security protection is performed by using the newly selected DRB ID. Specifically, if the UE has stored the user plane security key corresponding to the PSCell, the UE may directly use the user plane security key and the newly selected DRB ID. Otherwise, the UE needs to first derive K_{SN} by using the SK counter corresponding to the PSCell#1 and the master node key, and further derive the user plane security protection key based on K_{SN}.

When the UE is connected to the PSCell#1 again, a value of a corresponding DRB ID between the UE and the PSCell#1 is determined according to the preconfigured rule. Therefore, in this case, the DRB ID value used when the UE accesses the PSCell#1 served by the SN1 for the second time is different from the DRB ID value used when the UE accesses the PSCell#1 for the first time. Therefore, when the UE accesses the PSCell#1 for the second time, a key stream generated by the UE and the SN1 by using the DRB ID value is different from a key stream generated by the UE and the SN1 by using the DRB ID value when the UE accesses the SN1 for the first time, to prevent reuse of the key stream and improve communication security performance.

It may be understood that only main steps are shown in the procedure shown in the method 700, and an actual procedure may further include other steps. This is not limited in this application.

In the foregoing solution, the key notification sent by the MN to the candidate SN includes different K_{SN} corresponding to different PSCells. Similarly, the configuration sent by the MN to the UE includes different SK counters corresponding to different PSCells, to ensure that different K_{SN} is derived by the UE for different PSCells, and K_{SN} derived by the UE side is the same as K_{SN} received by the SN side for a same PSCell, to implement key isolation between different PSCells. Further, the pre-configured rule of DRB IDs is used, so that different DRB IDs are used when the UE is connected to a same PSCell for a plurality of times. The different DRB IDs ensure that different key streams are used when a key does not change, to further prevent reuse of the key stream.

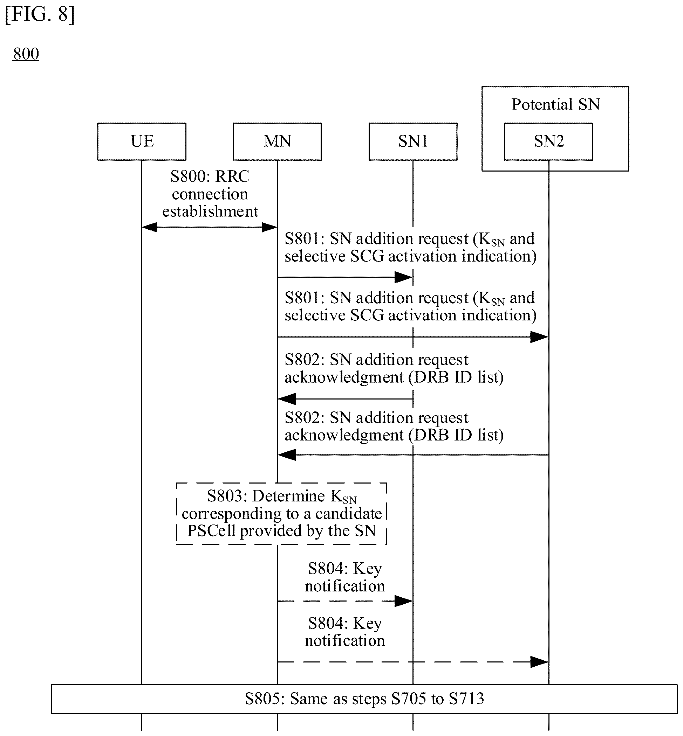

FIG. 8 is a flowchart of an example of a method 800 according to an embodiment of this application. The following provides example descriptions of the method 800 with reference to steps in FIG. 8. A difference from the method 700 is that an MN brings K_{SN} to an SN by using an SN addition request. If the SN subsequently provides two or more candidate PSCells, the MN continues to generate K_{SN} corresponding to remaining candidate PSCells and sends K_{SN} to the SN.

S800: An RRC connection is established between UE and the MN.

Specifically, for a detailed RRC connection establishment procedure, refer to 3GPP TS 38.331.

S801: The MN sends an SN addition request message to a candidate SN. Correspondingly, the candidate SN receives the SN addition request message from the MN.

For example, when determining to configure selective SCG activation for the UE, the MN separately sends an SN addition request to a candidate SN1 and another candidate SN. It can be understood that the another candidate SN in this embodiment of this application includes one or more SNs other than the SN1. For ease of description, in this embodiment of this application, an example in which an SN2 is the another candidate SN is used for description. However, this application is not limited thereto.

It should be noted that, when it is determined to initiate selective SCG activation, the SN addition request message includes a UE security capability, a UE security policy, an available DRB ID list, K_{SN}, and selective SCG activation indication information. K_{SN} is a root key of the candidate SN, and the MN derives different K_{SN} for each candidate SN. The selective SCG activation indication information is used to request selective SCG activation from the SN. The selective SCG activation indication information may be a newly added IE, or a new value is assigned to an existing IE. This is not limited in this application.

Optionally, in a PDU split scenario, the SN addition request message further includes a user plane integrity protection and ciphering activation decision that is of a PDU session and that is determined by the MN.

S802: The candidate SN sends an SN addition request acknowledgment message to the MN. Correspondingly, the MN receives the SN addition request acknowledgment message from the SN1. For a specific step, refer to step S702. Details are not described herein again.

S803: After receiving the SN addition request message acknowledgment from the SN, the MN determines whether to further provide K_{SN} corresponding to a PSCell for the SN.

Specifically, for each SN, if the SN provides only one candidate PSCell, the MN may skip steps S803 and S804. If the SN provides N candidate PSCells (N>=2), the MN needs to generate remaining N-1 K_{SN}. K_{SN} sent by the MN to the SN in S801 and N-1 K_{SN} respectively correspond to the N candidate PSCells provided by the SN. Further, the MN stores a relationship between an SK counter and a corresponding PSCell configuration. K_{SN} corresponding to a PSCell is derived based on an SK counter value.

S804: The MN sends a key notification message to the candidate SN that provides the N (N>=2) PSCells. Correspondingly, the candidate SN receives the key notification message from the MN.

The key notification message includes remaining N-1 K_{SN} and identifiers of corresponding candidate information. The identifier of the candidate information is used by the SN to determine the PSCell corresponding to K_{SN}. In this way, when the UE accesses the PSCell subsequently, the SN may determine K_{SN} that needs to be used. It should be noted that the MN may send remaining N-1 K_{SN} to the SN by using one message or by using a plurality of messages. Each message carries at least one K_{SN}. This is not limited.

The SN associates K_{SN} with a configuration corresponding to a corresponding PSCell for storage. Specifically, after the candidate SN receives N-1 K_{SN} from the key notification message, the SN associates, based on the identifier of the candidate information, N-1 K_{SN} with the configurations corresponding to the corresponding N-1 PSCells for storage. In addition, the SN may further associate, based on the identifier of the candidate information, K_{SN} received in step S801 with a configuration corresponding to a corresponding PSCell for storage.

Step 805: For a specific step, refer to steps S705 to S713. Details are not described herein again.

In the foregoing solution, in a manner in which the MN brings one K_{SN} to the SN by using the SN addition request, when the SN provides only one candidate PSCell, the MN does not need to send a key notification to the SN, to reduce signaling. This can reduce changes to an existing procedure to a maximum extent, and ensure system compatibility.

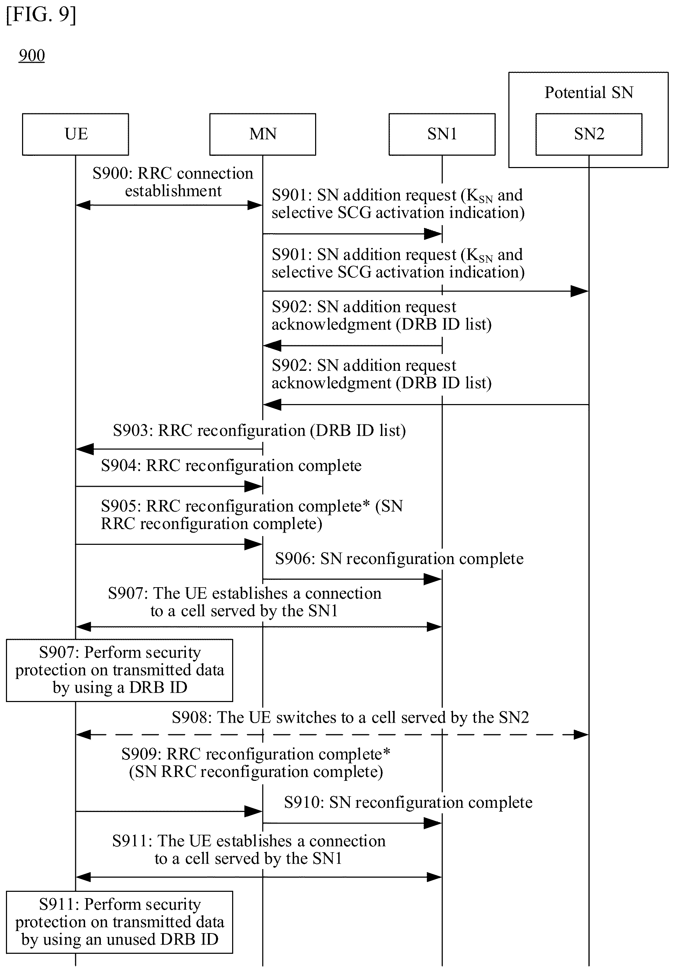

FIG. 9 is a flowchart of an example of a method 900 according to an embodiment of this application. The following provides example descriptions of the method 900 with reference to steps in FIG. 9. A difference from the method 700 is that in this embodiment, DRB IDs in corresponding configurations of different candidate PSCells served by a same SN are different. Therefore, K_{SN} may be specific to the SN. That is, root keys of different PSCells served by the same SN are the same. In the method 700 and the method 800, K_{SN} is specific to a PSCell. That is, root keys of different PSCells served by a same SN are different.

S900: An RRC connection is established between UE and the MN.

Specifically, for a detailed RRC connection establishment procedure, refer to 3GPP TS 38.331.

S901: The MN sends an SN addition request message to a candidate SN. Correspondingly, the candidate SN receives the SN addition request message from the MN.

For example, when determining to configure selective SCG activation for the UE, the MN separately sends an SN addition request to a candidate SN1 and another candidate SN. It can be understood that the another candidate SN in this embodiment of this application includes one or more SNs other than the SN1. For ease of description, in this embodiment of this application, an example in which an SN2 is the another candidate SN is used for description. However, this application is not limited thereto.

It should be noted that, when it is determined to initiate selective SCG activation, the SN addition request message includes a UE security capability, a UE security policy, an available DRB ID list, K_{SN}, and selective SCG activation indication information. K_{SN} is a key of the candidate SN. The MN derives different K_{SN} for each candidate SN. The MN stores a relationship between an SK counter and a corresponding SN, and the SK counter is used to derive K_{SN} of the corresponding SN. The selective SCG activation indication information is used to request selective SCG activation from the SN. The selective SCG activation indication information may be a newly added IE, or a new value is assigned to an existing IE. This is not limited in this application.

Optionally, in a PDU split scenario, the SN addition request message further includes a user plane integrity protection and ciphering activation decision that is of a PDU session and that is determined by the MN.

S902: For related descriptions, refer to S702. A difference from S702 lies in that in this embodiment of this application, root keys of different PSCells served by a same SN are the same, and DRB IDs used for different candidate PSCells served by a same SN cannot be repeated. It may be understood that DRB IDs used by the UE during initial access and re-access to a same PSCell or different PSCells served by a same SN are different.

It should be noted that, when DRB IDs used by different candidate PSCells served by a same SN cannot be repeated, the SN may generate a DRB ID list in any one of the following manners:
1. Generate corresponding DRB ID lists for the different candidate PSCells served by the same SN: The SN generates, for each determined candidate PSCell, an identifier list corresponding to a DRB in the candidate PSCell. For a manner of generating the identifier list, refer to Manner 1 and Manner 2 in S702. In this case, the DRB ID list includes the identifier lists corresponding to all the candidate PSCells.
2. Generate one DRB ID list for different candidate PSCells served by a same SN: The SN directly generates a DRB ID list corresponding to the SN, where the DRB ID list is shared by all candidate PSCells served by the SN. For a manner of generating the DRB ID list, refer to Manner 1 and Manner 2 in S702. It may be understood that all candidate PSCells served by the SN use the DRB ID list. For example, a DRB ID list corresponding to the SN is 1, 2, 3, and 4. Assuming that DRB IDs used by the UE to access a PSCell#1 served by an SN1 for the first time are 1 and 2, after determining to switch to another SN, the UE sets the DRB IDs 1 and 2 used between the UE and the SN1 as used, or deletes the DRB IDs 1 and 2 from the DRB ID list. Subsequently, when the UE accesses any PSCell served by the SN1 again, DRB IDs that can be used are 3 and 4.

S903: The MN sends an RRC reconfiguration message to the UE. Correspondingly, the UE receives the RRC reconfiguration message from the MN.

The MN generates the RRC reconfiguration message based on a stored relationship between an SK counter and a corresponding SN. The RRC reconfiguration message includes the SK counter and a configuration of the SN.

Specifically, for each SN, SK counters corresponding to different PSCells served by the SN are the same. For example, a PSCell configuration of the SN may include a same SK counter, or the configuration of the SN includes only one SK counter, and all PSCell configurations share the SK counter, to indicate that when the UE accesses any PSCell of the SN, a to-be-used DRB ID is determined from a same DRB ID list. The SK counter is stored by the MN in step S901.

The configuration of the SN includes a DRB ID list. The DRB ID list is the DRB ID list generated in step S702. The DRB ID list may be a default DRB ID and at least one candidate DRB ID in Manner 1, or may be at least two candidate DRB IDs in Manner 2.

Optionally, the RRC reconfiguration message further includes an execution condition associated with a corresponding PSCell. When the execution condition corresponding to the PSCell is satisfied, the UE may select the PSCell.

S904 to S906: For specific steps, refer to S706 to S708. Details are not described herein again.

S907: The UE establishes a connection to the selected PSCell#1 served by the SN1. For related descriptions, refer to S709. A difference from S709 lies in that the UE derives K_{SN} by using the corresponding SK counter and a master node key. The SK counter herein corresponds to the SN, and the SK counter in S709 corresponds to the PSCell.

S908 (optional): For related descriptions, refer to S710. A difference from S710 lies in that a cell served by another SN different from the SN1 is accessed herein.

After determining to switch to another SN, the UE sets the DRB ID used between the UE and SN1 as used, or deletes the DRB ID from the DRB ID list. Similarly, after determining that the UE releases the connection, the SN1 sets the currently used DRB ID as used, or deletes the currently used DRB ID from the DRB ID list.

A same DRB ID list is used for PSCells that use a same SK counter. The UE associates the PSCell configuration associated with the same SK counter with the DRB ID list for storage.

S909: For related descriptions, refer to S711. A difference from S711 lies in that the PSCell herein may be any PSCell served by the SN1, and is not limited to a PSCell that has been accessed before.

S910: For a specific step, refer to S712. Details are not described herein again.

S911: For related descriptions, refer to S713. A difference from S711 lies in that the PSCell herein may be any PSCell served by the SN1, and is not limited to a PSCell that has been accessed before. Security protection is performed on transmitted data between the UE and the SN1 based on remaining candidate DRB IDs in the DRB ID list. The candidate DRB IDs are DRB IDs that are not used in the DRB ID list. Specifically, the UE and the SN1 each select remaining candidate DRB IDs from the DRB list according to a same pre-configured rule. For a selection method, refer to step S902.

The UE may determine, based on same SK counter values used by the UE to access the SN1 twice, or an association relationship between the PSCell configuration and the DRB ID list in S908, that the UE accesses the same SN twice.

In the foregoing solution, the MN uses different SN counters to ensure that initial K_{SN} is different for different SNs. In addition, upon subsequent switching to a same SN, although same K_{SN} is used, security protection is performed by using different DRB IDs, to avoid reuse of a key stream.

When the UE is connected to the SN again, a value of a corresponding DRB ID between the UE and the SN is determined according to the preconfigured rule. Therefore, in this case, the DRB ID value used when the UE accesses the PSCell#1 served by the SN1 for the second time or another PSCell is different from the DRB ID value used when the UE accesses the PSCell#1 served by the SN1 for the first time. Therefore, when the UE accesses the SN1 for the second time, a key stream generated by the UE and the SN1 by using the DRB ID value is different from a key stream generated by the UE and the SN1 by using the DRB ID value when the UE accesses the SN1 for the first time, to prevent reuse of the key stream and improve communication security performance.

It may be understood that the method 700 to the method 900 are described by using a selective SCG activation procedure as an example. However, this application is not limited thereto. In an example, some steps in the method 700 to the method 900 may be further applied to the CPA and CPC procedures shown in FIG. 3 and FIG. 4.

Based on a same inventive concept as the method embodiments, an embodiment of this application further provides an apparatus 1000 and an apparatus 1100, configured to perform the methods performed by UE, an MN, or an SN in the foregoing embodiments of the methods 700 to 900. For related features, refer to the foregoing method embodiments. Details are not described herein again.

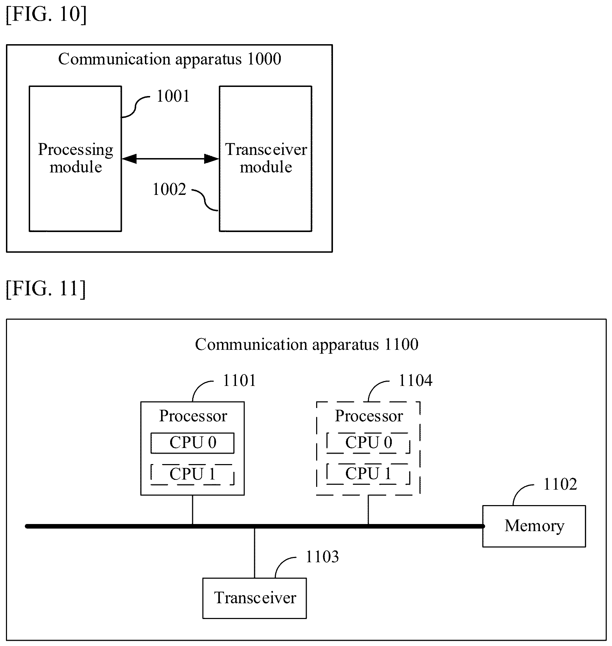

In an example, as shown in FIG. 10, the apparatus 1000 includes a processing module 1001 and a transceiver module 1002. The transceiver module is configured to perform corresponding message receiving and sending actions, and the processing module may be configured to perform all actions except receiving and sending information. For specific functions of the processing module 1001 and the transceiver module 1002, refer to the descriptions in the foregoing method embodiments. Details are not described herein again.

For example, FIG. 11 is a second schematic diagram of a structure of a communication apparatus according to an embodiment of this application. The communication apparatus may be UE, an MN, or an SN. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing unit, CPU), or may be an application specific integrated circuit (application specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1101 may perform various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 701 through an interface circuit (not shown in FIG. 7) of the communication apparatus 1100. This is not specifically limited in this embodiment of this application.

The transceiver 1103 is configured to communicate with another communication apparatus. For example, the communication apparatus 1100 is a terminal device, and the transceiver 1103 may be configured to communicate with a network device or communicate with another terminal device. For another example, the communication apparatus 1100 is a network device, and the transceiver 1103 may be configured to communicate with a terminal device or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, combine some components, or have different component arrangements.

In addition, for technical effects of the communication apparatus 1100, refer to the technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one item (piece) of the following" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a communication apparatus, a radio resource control RRC reconfiguration message, wherein the RRC reconfiguration message comprises configuration information of at least two candidate cells, the at least two candidate cells comprise a first candidate cell and a second candidate cell, the configuration information of the first candidate cell comprises a first count value and a first identifier list corresponding to a first data radio bearer DRB, and the first identifier list comprises at least two DRB identifiers IDs used to represent the first DRB; and the configuration information of the second candidate cell comprises a second count value and a second identifier list corresponding to a second DRB, and the second identifier list comprises at least two DRB IDs used to represent the second DRB; and
when accessing the first candidate cell, protecting, by the communication apparatus based on a first root key and a first DRB ID in the first identifier list, communication data that is transmitted between the communication apparatus and the first candidate cell through the first DRB, wherein the first root key is generated by the communication apparatus based on the first count value.

2. The method according to claim 1, wherein before protecting, by the communication apparatus based on the first root key and the first DRB ID in the first identifier list, the communication data that is transmitted between the communication apparatus and the first candidate cell through the first DRB, the method further comprises:
selecting, by the communication apparatus, the first DRB ID from the first identifier list.

3. The method according to claim 2, wherein the first DRB **ID** is a DRB **ID** that is not used in the first identifier list.

4. The method according to any one of claims 1 to 3, wherein the method further comprises:
deleting, by the communication apparatus, the first DRB ID, or marking the first DRB ID as used.

5. The method according to any one of claims 1 to 4, wherein the method further comprises:
when leaving the first candidate cell and accessing the second candidate cell, protecting, by the communication apparatus based on a second root key and a second DRB **ID** in the second identifier list, communication data that is transmitted between the communication apparatus and the second candidate cell through the second DRB, wherein the second root key is generated by the communication apparatus based on the second count value.

6. The method according to claim 5, wherein the method further comprises:
when leaving the second candidate cell and accessing the first candidate cell again, protecting, by the communication apparatus based on the first root key and a third DRB ID in the first identifier list, communication data that is transmitted between the communication apparatus and the first candidate cell through the first DRB, wherein the third DRB ID is different from the first DRB ID.

7. The method according to claim 5 or 6, wherein before protecting, by the communication apparatus based on the second root key and the second DRB ID in the second identifier list, the communication data that is transmitted between the communication apparatus and the second candidate cell through the second DRB, the method further comprises:
selecting, by the communication apparatus, the second DRB ID from the second identifier list.

8. The method according to claim 7, wherein the second DRB **ID** is a DRB **ID** that is not used in the second identifier list.

9. The method according to any one of claims 5 to 8, wherein the method further comprises:
deleting, by the communication apparatus, the second DRB ID, or marking the second DRB ID as used.

10. The method according to any one of claims 1 to 9, wherein the first count value is different from the second count value.

11. The method according to any one of claims 1 to 9, wherein the first count value is the same as the second count value, and a DRB ID in the first identifier list is different from a DRB ID in the second identifier list.

12. A communication method, wherein the method comprises:
receiving a first identifier list corresponding to a first data radio bearer DRB corresponding to a first candidate cell and a second identifier list corresponding to a second DRB corresponding to a second candidate cell, wherein the first identifier list comprises at least two DRB identifiers IDs used to represent the first DRB, and the second identifier list comprises at least two DRB IDs used to represent the second DRB; and
sending a radio resource control RRC reconfiguration message to a communication apparatus, wherein the RRC reconfiguration message comprises configuration information of the first candidate cell and configuration information of the second candidate cell, the configuration information of the first candidate cell comprises a first count value and the first identifier list, the configuration information of the second candidate cell comprises a second count value and the second identifier list, the first count value is used to generate a first root key shared between the communication apparatus and the first candidate cell, and the second count value is used to generate a second root key shared between the communication apparatus and the second candidate cell.

13. The method according to claim 12, wherein receiving the first identifier list corresponding to the first data radio bearer DRB corresponding to the first candidate cell and the second identifier list corresponding to the second DRB corresponding to the second candidate cell comprises: receiving the first identifier list from a first secondary node, and receiving the second identifier list from a second secondary node, wherein the first secondary
node is different from the second secondary node.

14. The method according to claim 13, wherein the method further comprises:
sending the first root key to the first secondary node; and
sending the second root key to the second secondary node.

15. The method according to claim 12, wherein receiving the first identifier list corresponding to the first data radio bearer DRB corresponding to the first candidate cell and the second identifier list corresponding to the second DRB corresponding to the second candidate cell comprises:
receiving the first identifier list and the second identifier list from a third secondary node.

16. The method according to claim 15, wherein the method further comprises:
sending the first root key and the second root key to the third secondary node.

17. The method according to any one of claims 12 to 16, wherein the first count value is different from the second count value.

18. The method according to claim 15 or 16, wherein the first count value is the same as the second count value, and a DRB ID in the first identifier list is different from a DRB ID in the second identifier list.

19. The method according to claim 18, wherein the first root key is the same as the second root key, and the method further comprises:
sending the first root key and/or the second root key to the third secondary node.

20. A communication method, wherein the method comprises:
receiving a secondary node addition request message from a master node;
generating a first identifier list corresponding to a first data radio bearer DRB corresponding to a first candidate cell, wherein the first identifier list comprises at least two DRB identifiers IDs used to represent the first DRB; and
in response to the secondary node addition request message, sending a secondary node addition request acknowledgment message to the master node, wherein the secondary node addition request acknowledgment message comprises the first identifier list.

21. The method according to claim 20, wherein the method further comprises:
receiving a first root key from the master node; and
protecting, based on the first root key and a first DRB ID in the first identifier list, communication data that is transmitted between a communication apparatus and the first candidate cell through the first DRB, wherein the first DRB ID is a DRB ID that is not used in the first identifier list.

22. The method according to claim 21, wherein the method further comprises:
deleting the first DRB ID, or marking the first DRB ID as used.

23. A communication apparatus, comprising a module configured to perform the communication method according to any one of claims 1 to 11.

24. A master node, comprising a module configured to perform the method according to any one of claims 12 to 19.

25. A secondary node, wherein the secondary node comprises a module configured to perform the method according to any one of claims 20 to 22.

26. A computer-readable storage medium, wherein the computer-readable storage medium comprises a computer program or instructions, and when the computer program or the instructions are run on a computer, the computer is enabled to perform the communication method according to any one of claims 1 to 22.

27. A communication system, wherein the communication system comprises a communication apparatus and a master node, the communication apparatus is configured to perform the method according to any one of claims 1 to 11, and the master node is configured to perform the method according to any one of claims 12 to 19.

28. A computer program product, wherein the computer program product comprises a computer program or instructions, and when the computer program or the instructions are run on a computer, the computer is enabled to perform the communication method according to any one of claims 1 to 22.
